# EUROPEAN PATENT SPECIFICATION

(11) **EP 2 487 028 B1**
(45) Date of publication and mention of the grant of the patent: **01.01.2014**
(21) Application number: 12154179.1
(22) Date of filing: 07.02.2012
(51) Int. Cl.: B32B 1/08, F01N 13/14, F01N 13/10

(54) **Structured body and method for manufacturing structured body**
Strukturkörper und Herstellungsverfahren für einen Strukturkörper
Corps structuré et procédé de fabrication d'un corps structuré

(30) Priority: 09.02.2011 JP 2011026387
(43) Date of publication of application: 15.08.2012
(73) Proprietor: Ibiden Co., Ltd., Ogaki-shi Gifu 503-8604 (JP)
(72) Inventor: Mutsuda, Fumiyuki, Gifu, 501-0695 (JP); Fujita, Yoshitaka, Gifu, 501-0695 (JP)
(74) Representative: HOFFMANN EITLE

(56) References cited:
- DATABASE WPI Week 198632 Thomson Scientific, London, GB; AN 1986-207874 XP002673455, -& JP 61 139433 A (NICHIAS CORP) 26 June 1986 (1986-06-26)

## Description

### TECHNICAL FIELD

The present invention relates to a structured body, and a method for manufacturing a structured body.

### BACKGROUND ART

A catalytic converter is disposed in a pathway of an exhaust pipe in order to treat harmful materials contained in exhaust gases discharged from an engine.
It is necessary to keep a temperature of exhaust gases and an exhaust pipe through which the exhaust gases pass at a temperature suitable for catalyst activation (hereinafter, also referred to as a catalyst activation temperature) in order to enhance purifying efficiency of harmful materials of a catalytic converter.

In a conventional exhaust gas purifying system, a catalytic converter temperature at the time of engine start is lower than the catalyst activation temperature.
Therefore, it is required that a temperature of the exhaust pipe connected to an engine can be raised to the catalyst activation temperature in a short time from engine start.

For example, Patent Document 1 discloses an exhaust pipe provided with a can-type base material made of metal and a surface coating layer comprising a crystalline inorganic material and an amorphous binder material (amorphous inorganic material), which is formed on the peripheral face of the base material.
In a conventional exhaust pipe described in Patent Document 1, it is described that a heat insulating property is excellent when the thermal conductivity of the surface coating layer is lower than that of the base material. It is described that as a result of this, a temperature can be raised to the catalyst activation temperature in a short time from engine start in a conventional exhaust pipe described in Patent Document 1.

### Patent Document 1: JP-A 2009-133214

JP 61139433 describes a tube suitable for use as an automobile exhaust pipe, which comprises a fibrous cylindrical moulding made of heat-resistant fibers and inorganic binder, a lining layer surrounding the inner surface of the fibrous cylindrical moulding, and a metallic outer covering surrounding the outer surface of the fibrous cylindrical moulding.

### SUMMARY OF THE INVENTION

### PROBLEMS TO BE SOLVED BY THE INVENTION

However, in a conventional exhaust pipe described in Patent Document 1, for example, when the surface coating layer is formed on an inner face of the exhaust pipe, the surface coating layer is exposed directly to high-temperature exhaust gases. When as described above, the surface coating layer is exposed to a high-temperature in a conventional exhaust pipe described in Patent Document 1, the amorphous inorganic material composing the surface coating layer is softened. As a result of this, in a conventional exhaust pipe described in Patent Document 1, a problem that the surface coating layer is peeled off from the base material arises.

Moreover, a conventional exhaust pipe described in Patent Document 1 causes a problem that when the surface coating layer is exposed directly to high-temperature exhaust gases, the surface coating layer of the exhaust pipe is corroded by at least one of nitrogen oxide (NOx) and sulfur oxide (SOx) contained in the exhaust gases.

The present invention was made to solve the above-mentioned problems, and it is an object of the present invention to provide a structured body excellent in heat resistance while securing heat insulating properties, and a method for manufacturing the structured body. Further, the structured body of the present invention is particularly suitable for the case where the structured body is used as an exhaust pipe.

### MEANS FOR SOLVING THE PROBLEMS

In order to achieve the above-mentioned object, the structured body according to claim 1 is a structured body including:
a base material made of metal; and
a surface coating layer formed on the surface of the base material,
wherein
the surface coating layer includes:
   a first layer which is formed on the surface of the base material and contains an amorphous inorganic material; and
   a second layer which is formed as an outermost layer of the surface coating layer and contains a crystalline inorganic material having a softening point of 950°C or higher,
   said amorphous inorganic material contained in said first layer of the surface coating layer being a low melting point glass having a softening point of 300-1000°C, and
   said crystalline inorganic material contained in said second layer of the surface coating layer being one of zirconia and alumina,
   said second layer of the surface coating layer is formed by thermal spraying.

In the structured body according to claim 1, the surface coating layer is formed on the surface of the base material made of metal. As the surface coating layer, first, the first layer containing an amorphous inorganic material is formed on the surface of the base material. The thermal conductivity of the amorphous inorganic material composing the first layer of the surface coating layer is lower than that of the metal composing the base material. Accordingly, when the base material of the structured body is heated, a heat transfer rate of the base material is high, but a heat transfer rate, at which heat is transferred from the base material through the surface coating layer to the outside of the structured body, is low.
Accordingly, particularly in a low-temperature (approximately less than 500°C) region in which heat conduction largely contributes to heat transfer, heat is hardly released to the outside of the structured body. As a result of this, a temperature of the structured body can be quickly raised when the structured body is heated. Thus, the structured body according to claim 1 is excellent in heat insulating properties.

Moreover, in the structured body according to claim 1, the second layer containing a crystalline inorganic material having a softening point of 950[deg.]C or higher is formed as an outermost layer of the surface coating layer. Accordingly, even when the surface coating layer of the structured body is exposed to a high-temperature, the crystalline inorganic material existing in the outermost layer of the surface coating layer of the structured body hardly softens. Therefore, it is possible to prevent the surface coating layer from peeling from the base material made of metal. Thus, the structured body according to claim 1 is excellent in heat resistance.
As described above, since the structured body according to claim 1 is excellent in heat insulating properties and heat resistance, it can be suitably used, for example, as an exhaust pipe.

In the structured body according to claim 1, the crystalline inorganic material contained in the second layer of the surface coating layer is one of zirconia and alumina. Zirconia or alumina is a crystalline inorganic material having excellent heat resistance. Therefore, even when the surface coating layer of the structured body is exposed to a high-temperature, zirconia or alumina existing in the outermost layer of the surface coating layer of the structured body hardly softens, and therefore it is possible to prevent the surface coating layer from peeling from the base material made of metal.
Further, zirconia or alumina is also a crystalline inorganic material having excellent corrosion resistance. Therefore, when the surface coating layer of the structured body is exposed directly to high-temperature exhaust gases, it is possible to prevent the surface coating layer of the structured body from being corroded by at least one of nitrogen oxide (NOx) and sulfur oxide (SOx) contained in the exhaust gases. Further, if the surface coating layer of the structured body is composed of only a first layer, the surface coating layer causes a problem that foreign matters adhere to the surface coating layer in softening, leading to degradation of the surface coating layer, in addition to acid corrosion, but the above problems can be prevented by the second layer of the surface coating layer.

In the structured body according to claim 3, a total thickness of the first layer and the second layer of the surface coating layer is 1 to 2000 μm.
When the total thickness of the first layer and the second layer of the surface coating layer of the structured body is 1 to 2000 μm, a heat insulating property of the structured body is excellent.
When the total thickness of the first layer and the second layer of the surface coating layer of the structured body is less than 1 μm, the structured body hardly ensures an adequate heat insulating property since the thickness of the surface coating layer is too small. Further, when the total thickness of the first layer and the second layer of the surface coating layer of the structured body is more than 2000 µm, the surface coating layer is vulnerable to a break since a degree of thermal impact to the surface coating layer increases.

In the structured body according to claim 4, the thermal conductivity at room temperature of the first layer of the surface coating layer is 0.05 to 2 W/m·K.
When the thermal conductivity at room temperature of the first layer of the surface coating layer of the structured body is 0.05 to 2 W/m·K, a heat transfer rate, at which heat is transferred to the outside of the structured body across the surface coating layer, can be slow. Consequently, the heat insulating properties of the structured body can be more enhanced.
It is technically difficult that the thermal conductivity at room temperature of the first layer of the surface coating layer of the structured body is brought into less than 0.05 W/m·K. Further, when the thermal conductivity at room temperature of the first layer of the surface coating layer of the structured body exceeds 2 W/m·K, the thermal conductivity of the first layer of the surface coating layer of the structured body is too large and therefore the structured body hardly ensures an adequate heat insulating property.
In addition, in the present specification, the room temperature refers to 25°C.

In the structured body according to claim 5, the first layer of the surface coating layer further contains a crystalline inorganic material.
A thermal expansion coefficient of the crystalline inorganic material is low, and a thermal expansion coefficient of the amorphous inorganic material is high. Therefore, the thermal expansion coefficient of the first layer of the surface coating layer can be controlled by adjusting a mixing ratio between the crystalline inorganic material and the amorphous inorganic material. Accordingly, by approximating the thermal expansion coefficient of the first layer of the surface coating layer to that of the base material made of a metal, adhesion between the first layer of the surface coating layer and the base material made of a metal can be improved.

In the structured body according to claim 6, the crystalline inorganic material contained in the first layer of the surface coating layer is an oxide of at least one of aluminum, manganese, iron, copper, cobalt and chromium.
Since a thermal expansion coefficient of the oxide of at least one of aluminum, manganese, iron, copper, cobalt and chromium described above is lower than a thermal expansion coefficient of the amorphous inorganic material, the thermal expansion coefficient of the first layer of the surface coating layer can be controlled by adjusting a mixing ratio between the above-mentioned oxide and the amorphous inorganic material. Accordingly, by approximating the thermal expansion coefficient of the first layer of the surface coating layer to that of the base material made of a metal, adhesion between the first layer of the surface coating layer and the base material made of a metal can be more improved.

In the structured body according to claim 7, the base material is a tubiform.
Such a structured body can be used as an exhaust pipe.
In addition, in the present specification, the tubiform refers to a body in which a shape of a cross section perpendicular to its longitudinal direction is closed. Accordingly, in the present specification, the tubiform includes not only a body in which a shape of a cross section perpendicular to its longitudinal direction is round-shaped, but also bodies in which a shape of a cross section perpendicular to its longitudinal direction is elliptic or polygonal such as rectangular. That is, specific examples of the tubiform include a cylindrical body, an ellipsoid and a square-tube-shaped body.

In the structured body according to claim 8, the surface coating layer is formed on an inner face of the tubiform.
When the structured body according to claim 8 is used as an exhaust pipe, the surface coating layer is exposed directly to the exhaust gases. Even in such a case, in the structured body according to claim 8, the crystalline inorganic material existing in the outermost layer of the surface coating layer hardly softens, and therefore it is possible to prevent the surface coating layer from peeling from the base material made of metal.

In the structured body according to claim 9, the surface coating layer is further formed on an outer face of the tubiform.
For example, by selecting the type of the crystalline inorganic material existing in the outermost layer of the surface coating layer formed on an outer face of the tubiform, the emissivity of the surface coating layer can be controlled. Specifically, in the structured body in which zirconia is used as the crystalline inorganic material existing in the outermost layer of the surface coating layer and stainless steel provided with an oxidized film formed on the surface is used as an metal composing the base material, the emissivity of the surface coating layer can be lower than that of the base material. Thus, when the surface coating layer is further formed on an outer face of the tubiform, heat dissipation to the outside of the structured body can be prevented. As a result of this, the heat insulating properties of the structured body in a low-temperature region can be enhanced.

In the structured body according to claim 10, the surface coating layer further includes:
a third layer including inorganic fibers; and
a fourth layer containing an amorphous inorganic material,
the third layer is formed on the surface of the first layer, and
the fourth layer is formed between the third layer and the second layer.
The third layer of the surface coating layer has a very large porosity since it includes inorganic fibers. Accordingly, a thermal conductivity of the surface coating layer can be significantly decreased. As a result of this, since a difference between the thermal conductivity of the surface coating layer and a thermal conductivity of the base material can be increased, the heat insulating properties of the structured body can be more improved.

In the structured body according to claim 1, the above-mentioned second layer of the surface coating layer is formed by thermal spraying.
Thermal spraying is a method in which a material to be a coating is melted or softened by heating and formed into fine particles, and the fine particles are accelerated and sprayed onto the surface of an object to form a coating.
In the thermal spraying, it is thought that a coating of almost every material can be formed as long as the material is melted or softened by heating. Thus, the second layer of the surface coating layer of the structured body can be easily formed by thermal spraying.
Further, in the structured body, in which the second layer of the surface coating layer of the structured body is formed by thermal spraying, the first layer of the surface coating layer of the structured body can mitigate thermal stress generated in the second layer (thermal-sprayed layer) of the surface coating layer of the structured body in an environment in which thermal impact such as rapid temperature rise or rapid temperature drop is added to the structured body. The reason for this is likely that if the second layer of the surface coating layer, having heat resistance, is formed by thermal spraying, high-temperature and high-speed particles to become a thermal-sprayed layer impinge on the first layer of the surface coating layer containing an amorphous inorganic material, and the particles to become a thermal-sprayed layer are engaged in the first layer of the surface coating layer, and consequently the second layer of the surface coating layer can firmly adhere to the first layer of the surface coating layer of the structured body. Accordingly, in the structured body according to claim 1, peeling of the surface coating layer due to thermal impact can be prevented.

The method for manufacturing a structured body according to claim 11 is a method for manufacturing the structured body according to any of claims 1 to 9, including processes of:
preparing a base material made of metal; and
forming a surface coating layer on the surface of the base material,
wherein
the process of forming the surface coating layer includes:
   a process of forming a first layer of the surface coating layer, containing an amorphous inorganic material, on the surface of the base material; and
   a process of forming a second layer of the surface coating layer, containing a crystalline inorganic material having a softening point of 950°C or higher, as an outermost layer of the surface coating layer, wherein
   said amorphous inorganic material contained in said first layer of the surface coating layer is a low melting point glass having a softening point of 300-1000°C, and
   said crystalline organic material contained in said second layer of the surface coating layer is one of zirconia and alumina, and
   said second layer of the surface coating layer is formed by thermal spraying.
In the method for manufacturing the structured body according to claim 11, a structured body excellent in heat resistance while securing heat insulating properties can be manufactured, as described in the structured body according to any of claims 1 to 9.

In the method for manufacturing the structured body according to claim 12, the above-mentioned process of forming the surface coating layer further includes:
a process of forming a third layer of the surface coating layer, including inorganic fibers, on the surface of the first layer of the surface coating layer; and
a process of forming a fourth layer of the surface coating layer, containing an amorphous inorganic material, between the third layer of the surface coating layer and the second layer of the surface coating layer.
In the method for manufacturing the structured body according to claim 12, a structured body having more excellent heat insulating properties can be manufactured since the structured body according to claim 10 can be manufactured.

In the method for manufacturing the structured body according to claim 11, the second layer of the surface coating layer is formed by thermal spraying.
In the method for manufacturing the structured body according to claim 11, as described above, the second layer of the surface coating layer of the structured body can be easily formed by thermal spraying.
Further, if the second layer of the surface coating layer, having heat resistance, is formed by thermal spraying, high-temperature and high-speed particles to become a thermal-sprayed layer impinge on the first layer of the surface coating layer containing an amorphous inorganic material, and the particles to become a thermal-sprayed layer are engaged in the first layer of the surface coating layer, and consequently the second layer of the surface coating layer can firmly adhere to the first layer of the surface coating layer of the structured body. Accordingly, the first layer of the surface coating layer of the structured body can mitigate thermal stress generated in the second layer (thermal-sprayed layer) of the surface coating layer of the structured body in an environment in which thermal impact such as rapid temperature rise or rapid temperature drop is added to the structured body, and as a result of this, peeling of the surface coating layer due to thermal impact can be prevented.

### BRIEF DESCRIPTION OF THE DRAWINGS

Fig. 1 is a cross-sectional view schematically showing an example of the structured body of the first embodiment of the present invention.
Figs. 2 (a), 2 (b) and 2 (c) each are a cross-sectional view schematically showing another example of the structured body of the first embodiment of the present invention.

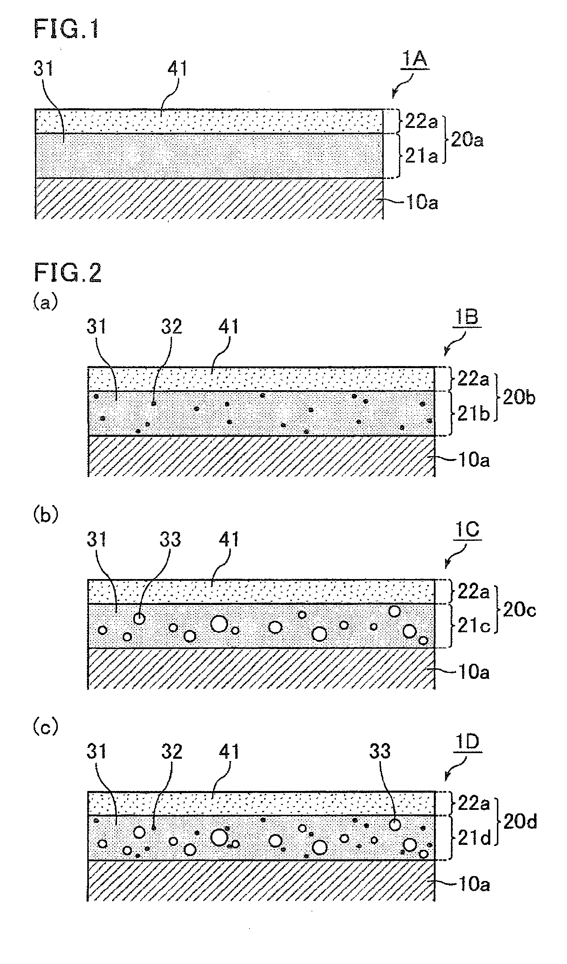

Figs. 2 (a), 2 (b) and 2(c) each are a cross-sectional view schematically showing another example of the structured body of the first embodiment of the present invention.

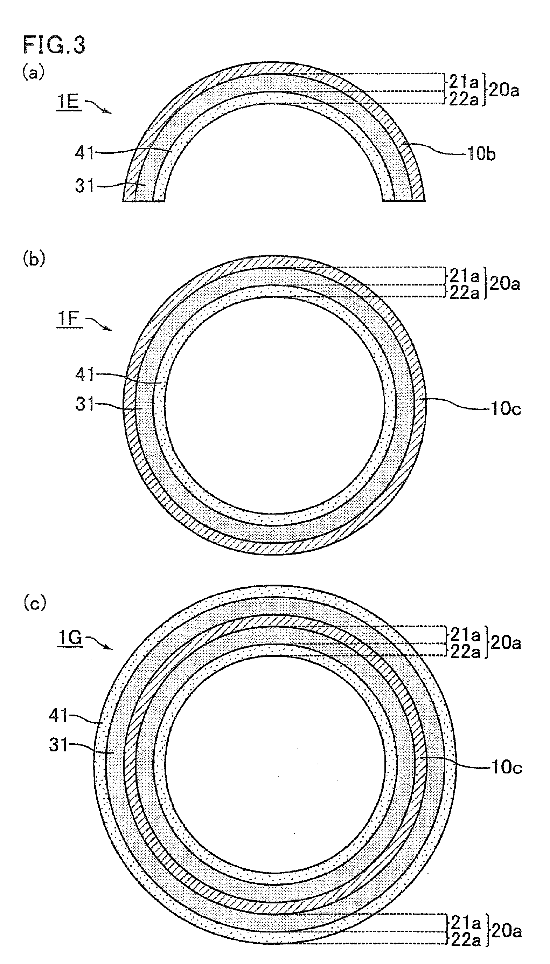

Figs. 3 (a), 3(b) and 3 (c) each are a cross-sectional view schematically showing further example of the structured body of the first embodiment of the present invention.

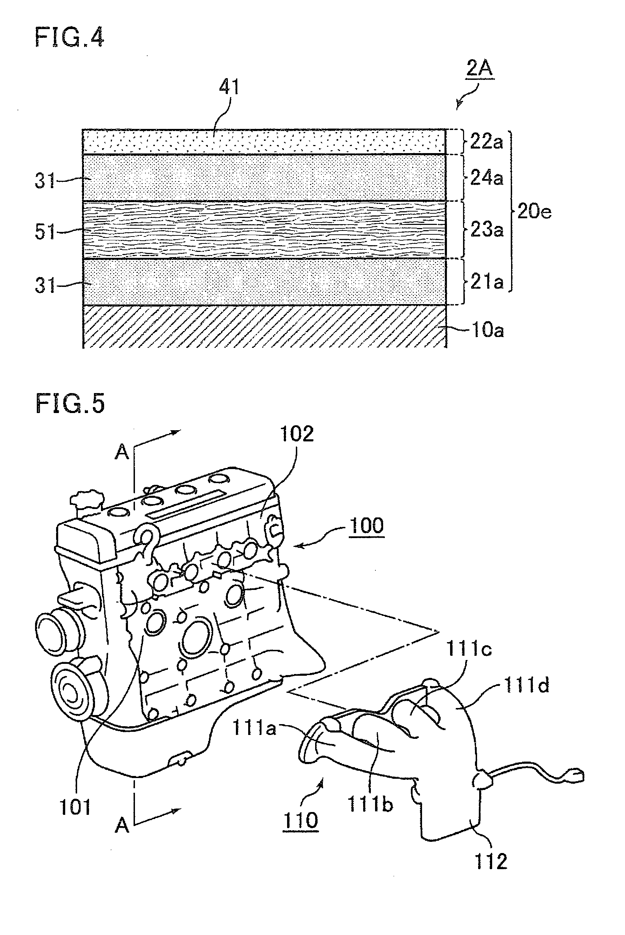

Fig. 4 is a cross-sectional view schematically showing an example of the structured body of the second embodiment of the present invention.
Fig. 5 is an exploded perspective view schematically showing an automobile engine and an exhaust manifold connected to the automobile engine in relation to the structured body of the third embodiment of the present invention.

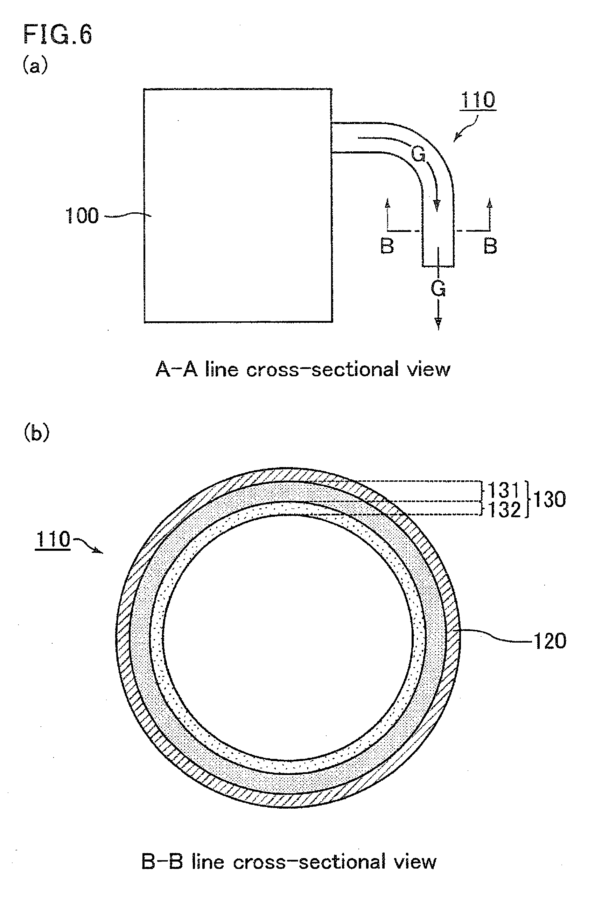

Fig. 6(a) is an A-A line cross-sectional view of an automobile engine and an exhaust manifold shown in Fig. 5, and Fig. 6(b) is a B-B line cross-sectional view of an exhaust manifold shown in Fig. 6(a).

### MODE FOR CARRYING OUT THE INVENTION

Hereinafter, embodiments of the present invention will be described specifically. However, the present invention is not limited to the following embodiments, and variations may be appropriately made without departing from the gist of the present invention.

### (First Embodiment)

Hereinafter, a first embodiment, which is an embodiment of the structured body and the method for manufacturing a structured body of the present invention, will be described.
First, a structured body of the first embodiment of the present invention will be described.
Fig. 1 is a cross-sectional view schematically showing an example of the structured body of the first embodiment of the present invention.
The structured body 1A shown in Fig.1 includes a base material 10a made of metal and a surface coating layer 20a formed on the surface of the base material 10a.

In the structured body 1A shown in Fig. 1, the surface coating layer 20a has a first layer 21a containing an amorphous inorganic material 31 and a second layer 22a containing a crystalline inorganic material 41.
The surface coating layer 20a of the structured body 1A of the first embodiment of the present invention has a two-layer structure, and specifically, it has a structure in which two layers of the first layer 21a and the second layer 22a are laminated in this order from the side of the base material 10a. In other words, the first layer 21a of the surface coating layer 20a is formed on the surface of the base material 10a, and the second layer 22a of the surface coating layer 20a is formed on the surface of the first layer 21a of the surface coating layer 20a and formed as an outermost layer of the surface coating layer 20a.

Examples of a material of the base material of the structured body include metals such as stainless steel, steel, iron and copper; and nickel alloys such as inconel, hastelloy and invar. With respect to these metal materials of the base material, as described later, by approximating their thermal expansion coefficients to the thermal expansion coefficient of a material composing the first layer of the surface coating layer, adhesion between the first layer of the surface coating layer and the base material made of a metal can be improved.
A shape of the base material is not particularly limited, but when the base material is used for an exhaust pipe, a tubiform is preferred, and a cylindrical-shape is more preferred.

The amorphous inorganic material contained in the first layer of the surface coating layer of the structured body is preferably a low melting point glass having a softening point of 300 to 1000°C. Further, a type of the low melting point glass is not particularly limited, and examples thereof include soda-lime glass, alkali-free glass, borosilicate glass, kali glass (potash glass), crystal glass, titanium crystal glass, barium glass, boron glass, strontium glass, alumina-silicate glass, soda-zinc glass and soda-barium glass.
These glasses may be used singly or may be used as a mixture of two or more of them.

If the low melting point glass as described above has a softening point in the range of 300 to 1000°C, the first layer of the surface coating layer can be easily and firmly formed on the surface of the base material made of a metal material by melting the low melting point glass, applying (coating) it onto the surface of the base material (metal material), and then firing by heating.
When the softening point of the low melting point glass is less than 300°C, the low melting point glass is readily softened when using it as an exhaust pipe to cause an extraneous material to adhere to the surface coating layer of the structured body. On the other hand, when the softening point of the low melting point glass is more than 1000°C, the base material tends to degrade due to heat treatment in forming the surface coating layer of the structured body.
In addition, the softening point can be measured according to the method specified in JIS R 3103-1 (2001) using, for example, Automatic Measuring Apparatus of Glass Softening and Strain Points (SSPM-31) manufactured by OPT Corporation.

A type of the borosilicate glass is not particularly limited, and examples thereof include SiO₂-B₂O₃-ZnO glass and SiO₂-B₂O₃-Bi₂O₃ glass. The crystal glass refers to glasses containing PbO, and its type is not particularly limited, and examples of the crystal glasses include SiO₂-PbO glass, SiO₂-PbO-B₂O₃ glass, and SiO₂-B₂O₃-PbO glass. A type of the boron glass is not particularly limited, and examples thereof include B₂O₃-ZnO-PbO glass, B₂O₃-ZnO-Bi₂O₃ glass, B₂O₃-Bi₂O₃ glass, and B₂O₃-ZnO glass. A type of the barium glass is not particularly limited, and examples thereof include BaO-SiO₂ glass.
Further, the amorphous inorganic material may include only one low melting point glass or may include a plurality of low melting point glasses among low melting point glasses described above.

A crystalline inorganic material contained in the second layer of the surface coating layer of the structured body has a higher softening point than that of the amorphous inorganic material contained in the first layer of the surface coating layer of the structured body. Specifically, the crystalline inorganic material contained in the second layer of the surface coating layer of the structured body has a softening point of 950°C or higher.

Specific examples of the crystalline inorganic material contained in the second layer of the surface coating layer of the structured body include zirconia and alumina.
More specific examples of composition of zirconia include CaO stabilized zirconia (5 wt% CaO-ZrO₂, 8 wt% CaO-ZrO₂, 31 wt% CaO-ZrO₂), MgO stabilized zirconia (20 wt% MgO-ZrO₂, 24 wt% MgO-ZrO₂), Y₂O₃ stabilize zirconia (6 wt% Y₂O₃ -ZrO₂, 7 wt% Y₂O₃-ZrO₂, 8 wt% Y₂O₃-ZrO₂, 10 wt% Y₂O₃ -ZrO₂, 12 wt% Y₂O₃-ZrO₂, 20 wt% Y₂O₃-ZrO₂) , zircon (ZrO₂-33 wt% SiO₂), and CeO stabilized zirconia. Further, more specific examples of composition of alumina include white alumina (Al₂O₃), gray alumina (Al₂O₃-1.5 to 4 wt% TiO₂), alumina·titania (Al₂O₃-13 wt% TiO₂, Al₂O₃-20 wt% TiO₂, Al₂O₃-40 wt% TiO₂, Al₂O₃-50 wt% TiO₂), alumina·yttria (3Al₂O₃·5Y₂O₃), alumina·magnesia (Mg·Al₂O₄), and alumina·silica (3Al₂O₃·2SiO₂).
Among these, zirconia having a low thermal conductivity, which is superior in heat resistance and corrosion resistance and has a thermal conductivity of 4 W/mK or less at 25°C, is preferred, and Y₂O₃ stabilized zirconia is more preferred.

Figs. 2 (a), 2 (b) and 2 (c) each are a cross-sectional view schematically showing another example of the structured body of the first embodiment of the present invention.
The structured body 1B shown in Fig. 2 (a), the structured body 1C shown in Fig. 2(b), and the structured body 1D shown in Fig. 2 (c) respectively have a similar configuration to the structured body 1A shown in Fig. 1 except that configurations of the first layer of the surface coating layer of the structured bodies are different from that of the structured body 1A.

The structured body 1B shown in Fig. 2 (a) includes a base material 10a made of metal and a surface coating layer 20b formed on the surface of the base material 10a.
In the structured body 1B shown in Fig. 2 (a), the surface coating layer 20b has a first layer 21b formed on the surface of the base material 10a, and a second layer 22a formed on the surface of the first layer 21b of the surface coating layer 20b as an outermost layer of the surface coating layer 20b.
As with the structured body 1A shown in Fig. 1, the second layer 22a of the surface coating layer 20b contains a crystalline inorganic material 41. On the other hand, the first layer 21b of the surface coating layer 20b contains an amorphous inorganic material 31 and further contains a crystalline inorganic material 32.

The structured body 1C shown in Fig. 2 (b) includes a base material 10a made of metal and a surface coating layer 20c formed on the surface of the base material 10a.
In the structured body 1C shown in Fig. 2 (b), the surface coating layer 20c has a first layer 21c formed on the surface of the base material 10a, and a second layer 22a formed on the surface of the first layer 21c of the surface coating layer 20c as an outermost layer of the surface coating layer 20c.
As with the structured body 1A shown in Fig. 1, the second layer 22a of the surface coating layer 20c contains a crystalline inorganic material 41. On the other hand, the first layer 21c of the surface coating layer 20c contains an amorphous inorganic material 31, and moreover, pores 33 exist in the first layer 21c of the surface coating layer 20c.

The structured body 1D shown in Fig. 2 (c) includes a base material 10a made of metal and a surface coating layer 20d formed on the surface of the base material 10a.
In the structured body 1D shown in Fig. 2 (c), the surface coating layer 20d has a first layer 21d formed on the surface of the base material 10a, and a second layer 22a formed on the surface of the first layer 21d of the surface coating layer 20d as an outermost layer of the surface coating layer 20d.
As with the structured body 1A shown in Fig. 1, the second layer 22a of the surface coating layer 20d contains a crystalline inorganic material 41. On the other hand, the first layer 21d of the surface coating layer 20d contains an amorphous inorganic material 31 and further contains a crystalline inorganic material 32. Further, pores 33 exist in the first layer 21d of the surface coating layer 20d.

When a crystalline inorganic material is contained in the first layer of the surface coating layer of the structured body like the structured body 1B shown in Fig. 2 (a) and the structured body 1D shown in Fig. 2(c), an oxide of transition metal is desirably used as the crystalline inorganic material contained in the first layer of the surface coating layer of the structured body. Further, the crystalline inorganic material contained in the first layer of the surface coating layer of the structured body is more desirably an inorganic particle composed of an oxide of at least one of aluminum, manganese, iron, copper, cobalt and chromium.
The inorganic particles composed of these oxides may be used singly or may be used as a mixture of two or more of them.

Among the materials composing the first layer of the surface coating layer of the structured body, the thermal expansion coefficient of the crystalline inorganic material including an oxide of a transition metal is as low as 8x10⁻⁶/°C to 9x10⁻⁶/°C, and the thermal expansion coefficient of the amorphous inorganic material including a low melting point glass is as high as 8x10⁻⁶/°C to 25x10⁻⁶/°C. Therefore, the thermal expansion coefficient of the first layer of the surface coating layer of the structured body can be controlled by adjusting a mixing ratio between the crystalline inorganic material and the amorphous inorganic material. On the other hand, among the materials composing the base material, a thermal expansion coefficient of stainless steel is 10x10⁻⁶/°C to 18x10⁻⁶/°C. Accordingly, by adjusting a mixing ratio between the crystalline inorganic material and the amorphous inorganic material, the thermal expansion coefficient of the first layer of the surface coating layer of the structured body can be approximated to that of the base material. As a result, adhesion between the first layer of the surface coating layer of the structured body and the base material can be improved.
A difference between the thermal expansion coefficient of the first layer of the surface coating layer of the structured body and the thermal expansion coefficient of the base material is desirably 10x10⁻⁶/°C or less. When the difference between both is 10x10⁻⁶°C or less, since adhesion between both is strong, peeling of one from the other or deformation or failure of the surface coating layer of the structured body and the base material particularly hardly occurs even though the surface coating layer of the structured body is exposed to a high-temperature.

When pores exist in the first layer of the surface coating layer of the structured body like the structured body 1C shown in Fig. 2 (b) and the structured body 1D shown in Fig. 2 (c), the thermal conductivity of the surface coating layer of the structured body can be reduced. Consequently, a difference between the thermal conductivity of the surface coating layer and the thermal conductivity of the base material of the structured body increases. Accordingly, particularly in a low-temperature region, heat is hardly released to the outside of the structured body. As a result of this, a temperature of the structured body can be quickly raised when the structured body is heated. Thus, particularly heat insulating properties in a low-temperature region can be improved.

When pores are present in the first layer of the surface coating layer of the structured body, the porosity of the first layer of the surface coating layer of the structured body is desirably 5 to 90%, and more desirably 10 to 70%.
When the porosity of the first layer of the surface coating layer of the structured body is less than 5%, the adequate effect of improving the heat insulating properties of the structured body is hardly achieved since the percentage of the pores contributing to a reduction in thermal conductivity is small. On the other hand, when the porosity of the first layer of the surface coating layer of the structured body exceeds 90%, since the percentage of the pores is too large, strength of the first layer of the surface coating layer of the structured body is deteriorated. As a result of this, it becomes hard to adequately ensure the strength of the structured body. Moreover, when the porosity of the first layer of the surface coating layer of the structured body exceeds 90%, since the percentage of the pores is too large, it becomes hard to ensure the adhesion of the first layer of the surface coating layer of the structured body to the base material.

The porosity of the first layer of the surface coating layer of the structured body can be measured by the following method. First, an orthogonal cross section of the structured body is observed with a scanning electron microscope (SEM), and a photograph of a SEM image is taken. Next, the SEM image is imported in a personal computer, and the SEM image is converted to a binary image (pore area and non-pore area) using an image analysis software (forexample, Photoshop manufactured by Adobe Systems Inc.). An area of a pore area existing in the first layer of the surface coating layer is measured. Then, a ratio of the area of the pore area to a total area of the pore area and the first layer of the surface coating layer is calculated and this calculated value is taken as a porosity of the first layer of the surface coating layer.
In addition, the orthogonal cross section of the structured body refers to a cross section of the structured body orthogonal to a plane in which the surface coating layer is formed.
Further, the porosity of the first layer of the surface coating layer can also be determined by actually measuring a thickness and a weight of the first layer of the surface coating layer to determine a bulk density of the first layer of the surface coating layer, and calculating a ratio of the bulk density to a true density of the first layer of the surface coating layer.

Figs. 3 (a), 3 (b) and 3 (c) each are a cross-sectional view schematically showing further example of the structured body of the first embodiment of the present invention.
The structured body 1E shown in Fig. 3 (a), the structured body 1F shown in Fig. 3(b), and the structured body 1G shown in Fig. 3 (c) respectively have a similar configuration to the structured body 1A shown in Fig. 1 except that shapes of the base materials are different from that of the structured body 1A.

In the structured body 1E shown in Fig. 3(a), the shape of the base material 10b is a semicylindrical-shape obtained by cutting a cylindrical-shape in half.
The surface coating layer 20a of the structured body 1E is formed on the surface on a smaller area side of the surfaces of the base material 10b.
A configuration of the surface coating layer 20a in the structured body 1E is similar to that of the surface coating layer 20a in the structured body 1A shown in Fig. 1.
In addition, in the structured body of the first embodiment of the present invention, when a semicylindrical-shaped base material is used, a face, on which the surface coating layer is formed, may be a surface on a larger area side (surface opposite to the form shown in Fig. 2(a)).
In the structured body of the first embodiment of the present invention, the surface coating layer may be formed on both faces of the semicylindrical-shaped base material.

In the structured body 1F shown in Fig. 3(b), the shape of the base material 10c is a cylindrical-shape.
The surface coating layer 20a of the structured body 1F is formed on the surface (inner face) on a smaller area side of the surfaces of the base material 10c.
A configuration of the surface coating layer 20a in the structured body 1F is similar to that of the surface coating layer 20a in the structured body 1A shown in Fig. 1.
In addition, in the structured body of the first embodiment of the present invention, when a cylindrical-shaped base material is used, a face, on which the surface coating layer is formed, may be a surface (outer face) on a larger area side.

In the structured body 1G shown in Fig. 3(c), the shape of the base material 10c is a cylindrical-shape.
The surface coating layer 20a of the structured body 1G is formed on both faces, namely an inner face and an outer face, of the base material 10c.
A configuration of the surface coating layer 20a in the structured body 1G is similar to that of the surface coating layer 20a in the structured body 1A shown in Fig. 1.

In addition, in the structured body of the first embodiment of the present invention, when a semicylindrical-shaped base material or a cylindrical-shaped base material is used, on the surface of the base material, any of the surface coating layer 20b in the structured body 1B shown in Fig. 2(a), the surface coating layer 20c in the structured body 1C shown in Fig. 2(b) and the surface coating layer 20d in the structured body 1D shown in Fig. 2(c) may be formed. Further, when the surface coating layer is formed on the both faces of the base material, the surface coating layers formed on the both faces may be the same or different.

In the structured body of the first embodiment of the present invention, the total thickness of the first layer and the second layer of the surface coating layer in the structured body is desirably 1 to 2000 μm, and more desirably 25 to 750 µm.
When the total thickness of the first layer and the second layer of the surface coating layer of the structured body is less than 1 μm, the structured body hardly ensures an adequate heat insulating property since the thickness of the surface coating layer of the structured body is too small. Further, when the total thickness of the first layer and the second layer of the surface coating layer of the structured body is more than 2000 μm, the surface coating layer is vulnerable to a break since a degree of thermal impact to the surface coating layer of the structured body increases.

In the structured body of the first embodiment of the present invention, the thickness of the first layer of the surface coating layer in the structured body is desirably 0.5 to 1200 μm, and more desirably 15 to 500 μm.
When the thickness of the first layer of the surface coating layer of the structured body is less than 0.5 μm, the structured body hardly ensures an adequate heat insulating property since the percentage of the amorphous inorganic material in the structured body is too small. Further, when the thickness of the first layer of the surface coating layer of the structured body exceeds 1200 μm, in the case of forming a surface coating layer having a predetermined thickness, the thickness of the second layer of the surface coating layer becomes small and therefore the structured body hardly ensures an adequate heat resistance.

In the structured body of the first embodiment of the present invention, the thickness of the second layer of the surface coating layer of the structured body is desirably 0.5 to 800 μm, and more desirably 10 to 250 μm.
When the thickness of the second layer of the surface coating layer of the structured body is less than 0.5 μm, the structured body hardly ensures an adequate heat resistance since the percentage of the crystalline inorganic material existing in the outermost layer of the surface coating layer of the structured body is too small. Further, when the thickness of the second layer of the surface coating layer of the structured body exceeds 800 μm, in the case of forming a surface coating layer having a predetermined thickness, the thickness of the first layer of the surface coating layer of the structured body becomes small and therefore the structured body hardly ensures an adequate heat insulating property.

In the structured body of the first embodiment of the present invention, the thermal conductivity at room temperature (25°C) of the first layer of the surface coating layer of the structured body is desirably 0. 05 to 2 W/m·K, and more desirably 0.1 to 2 W/m·K.
It is technically difficult that the thermal conductivity at room temperature of the first layer of the surface coating layer of the structured body is brought into less than 0.05 W/m·K. Further, when the thermal conductivity at room temperature of the first layer of the surface coating layer of the structured body exceeds 2 W/m·K, the thermal conductivity of the first layer of the surface coating layer of the structured body is too large and therefore the structured body hardly ensures an adequate heat insulating property.
The thermal conductivity at a room temperature of the first layer of the surface coating layer of the structured body can be measured by a laser flash method.

Next, a method for manufacturing a structured body of the first embodiment of the present invention will be described.
The method for manufacturing a structured body of the first embodiment of the present invention is a method for manufacturing a structured body including a base material made of metal and a surface coating layer formed on the surface of the base material, the method including processes of:
preparing a base material made of metal; and
forming a surface coating layer on the surface of the base material,
wherein
the process of forming the surface coating layer includes:
   a process of forming a first layer of the surface coating layer, containing an amorphous inorganic material, on the surface of the base material; and
   a process of forming a second layer of the surface coating layer, containing a crystalline inorganic material having a softening point of 950°C or higher, as an outermost layer of the surface coating layer.
Specifically, in the process of forming the surface coating layer, the first layer of the surface coating layer is formed on the surface of the base material, and then the second layer of the surface coating layer is formed on the surface of the first layer of the surface coating layer.
Here, taking the case where the structured body 1B shown in Fig. 2(a) is manufactured as an example, an example of the method for manufacturing the structured body of the first embodiment of the present invention will be described.

### (1) Process of Preparing Base Material Made of Metal

Starting from a base material made of metal (hereinafter, referred to as a metal base material or metal material), first, a cleaning process is performed in order to remove impurities on the surface of the metal base material.
The cleaning process is not particularly limited and publicly known cleaning process can be employed, and specifically, a process in which ultrasonic cleaning is carried out in an alcohol solvent can be employed.

Further, after the cleaning process, as required, the surface of the metal base material may be subjected to a roughening process in order to increase a specific surface area of the surface of the metal base material or to adjust the surface roughness of the metal base material. Specifically, for example, roughening processes such as sand blasting, etching, and high temperature oxidation may be performed. These processes may be used singly or in combination of two or more of them.
After the roughening process, a cleaning process may be further carried out.

### (2) Process of Forming First Layer of Surface Coating Layer

First, the crystalline inorganic material and amorphous inorganic material are mixed to prepare a raw material composition for the first layer of the surface coating layer.
Specifically, for example, a powder of the crystalline inorganic material and a powder of the amorphous inorganic material are adjusted so as to have a predetermined particle size and particle shape, and the respective powders are dry-mixed at a predetermined rate to prepare a mixed powder. Water is added to the mixed powder, and the resulting mixture is wet-mixed with a ball mill to prepare a raw material composition for the first layer of the surface coating layer.
Here, a mixing ratio of the mixed powder to water is not particularly limited, but it is desired that the amount of water is about 100 parts by weight with respect to 100 parts by weight of the mixed powder. The reason for this is that this mixing ratio yields viscosity suitable for application to the metal base material. Further, as required, the dispersion medium such as an organic solvent and the organic binder may be added to the raw material composition for the first layer of the surface coating layer.

Next, the surface of the metal base material is coated with the raw material composition for the first layer of the surface coating layer.
As a method of coating the base material with the raw material composition for the first layer of the surface coating layer, a method such as spray coating, electrostatic coating, ink-jet, transfer using a stamp or a roll, brush painting and electrodeposition coating may be used.
Or, the metal base material may be coated with the raw material composition for the first layer of the surface coating layer by immersing the metal base material in the raw material composition for the first layer of the surface coating layer.

Subsequently, the metal base material coated with the raw material composition for the first layer of the surface coating layer is subjected to firing process.
Specifically, the metal base material coated with the raw material composition for the first layer of the surface coating layer is dried, and then fired by heating to form a first layer of the surface coating layer.
A temperature of the firing is desirably a softening point of the amorphous inorganic material or more, and desirably 700 to 1100°C, varying depending on the type of the amorphous inorganic material mixed. When the firing temperature is set at a temperature of a softening point of the amorphous inorganic material or more, the amorphous inorganic material can firmly adhere to the metal base material, and the first layer of the surface coating layer firmly adhering to the metal base material can be formed.

### (3) Process of Forming Second Layer of Surface Coating Layer

The second layer of the surface coating layer, containing a crystalline inorganic material having a softening point of 950°C or higher, is formed on the surface of the first layer of the surface coating layer which has been formed in the above process (2).
In the method for manufacturing a structured body of the first embodiment of the present invention, the second layer of the surface coating layer is formed by a thermal spraying method since by this method, formation of a layer is easy and adhesion between the first layer and the second layer of the surface coating layer is excellent. However, the second layer of the surface coating layer may be formed, for example, by an electron beam physical vapor deposition method other than the thermal spraying method.

As the thermal spraying method, a method of plasma spraying, flame spraying, high speed flame spraying, vacuum spraying, arc spraying, wire spraying or explosion spraying can be employed. Among these, plasma spraying which can form a coating excellent in heat resistance is preferred, and gas plasma spraying is more preferred.
In the methods using gas plasma spraying, the second layer of the surface coating layer is formed on the surface of the metal base material with the first layer of the surface coating layer formed on the metal base material by thermal-spraying a powder of the crystalline inorganic material composing the second layer of the surface coating layer by use of gas plasma of Ar-H₂ or the like.
When the second layer of the surface coating layer is formed by using gas plasma spraying, spraying conditions such as a spraying current, a spraying voltage, a spraying distance, a powder-supply rate, amounts of Ar/H₂ are appropriately selected in accordance with a temperature of the sprayed particle (particle of the melted or softened crystalline inorganic material) and a desired thickness of the second layer of the surface coating layer.
Further, when the second layer of the surface coating layer is formed by using gas plasma spraying, a temperature at the time when the sprayed particles adhere to the surface of the first layer of the surface coating layer is maintained at a softening point of the amorphous inorganic material composing the first layer of the surface coating layer, or more. Thereby, the high-temperature and high-speed sprayed particles to become a thermal-sprayed layer (second layer of the surface coating layer) impinge on the first layer, containing an amorphous inorganic material, of the surface coating layer, and the sprayed particles to become a thermal-sprayed layer are engaged in the first layer of the surface coating layer, and consequently the second layer of the surface coating layer can firmly adhere to the first layer of the surface coating layer of the structured body.

In addition, when the second layer of the surface coating layer is formed, it is more preferred to perform the thermal spraying with the amorphous inorganic material (glass, etc.) composing the first layer of the surface coating layer softened by heating the metal base material with the first layer of the surface coating layer formed on its surface. The reason for this is that by performing thermal spraying with the amorphous inorganic material composing the first layer of the surface coating layer softened, the sprayed particles to become a thermal-sprayed layer are more engaged in the first layer of the surface coating layer, and consequently the second layer of the surface coating layer can firmly adhere to the first layer of the surface coating layer of the structured body.

By the above procedure, a structured body 1B, which is an example of the structured body of the first embodiment of the present invention and is shown in Fig. 2(a), can be manufactured.

In addition, when the structured body 1A shown in Fig. 1 is manufactured, the raw material composition for the first layer of the surface coating layer can be prepared in the same manner as in preparation of the raw material composition for the first layer of the surface coating layer described above except that the crystalline inorganic material is not added and dry mixing is not carried out.

Further, when the structured body 1C shown in Fig. 2(b) and the structured body 1D shown in Fig. 2 (c) are manufactured, as a method for forming pores in the first layer of the surface coating layer, a method, in which a pore-forming material, containing at least one of a pore-forming agent, a foaming agent, hollow fillers and inorganic fibers, is mixed in the raw material composition for the first layer of the surface coating layer to prepare a raw material composition for the first layer of the surface coating layer, can be used.
Among these, the pore-forming agent is preferably used.
As the pore-forming agent, for example, balloons which are fine hollow spheres composed of oxide base ceramic, spheric acrylic particles, and graphite can be used.

Further, an example of a method for manufacturing the structured body, in which a base material is a tubiform and a surface coating layer is formed on the inner face of the tubiform like a structured body 1F shown in Fig. 3 (b), will be described below.
First, as the metal base material, a first half-cut member and a second half-cut member obtained by cutting a tubiform in half are prepared. Next, the surface on a smaller area side of each of the first half-cut member and the second half-cut member is coated with the raw material composition for the first layer of the surface coating layer. Subsequently, the first half-cut member and the second half-cut member are subjected to a firing process to form a first layer of the surface coating layer on the surface of the first half-cut member and the second half-cut member, respectively. Then, with respect to the first half-cut member and the second half-cut member, a second layer of the surface coating layer, containing a crystalline inorganic material having a softening point of 950°C or higher, is formed on the surface of the first layer of the surface coating layer by using a method such as thermal spraying. Thereafter, the first half-cut member is joined to the second half-cut member by welding etc. to form a tubiform.
By the above procedure, a structured body, in which the metal base material is a tubiform and the surface coating layer is formed on an inner face of the tubiform, can be manufactured.

Moreover, when as with the structured body 1G shown in Fig. 3 (c), a structured body, in which the metal base material is a tubiform and the surface coating layer is formed on an outer face of the tubiform, is manufactured, a can-type metal base material may be employed as a metal base material, or the above-mentioned first half-cut member and second half-cut member may be employed.

Hereinafter, the effects of the structured body and the method for manufacturing the structured body of the first embodiment of the present invention will be enumerated.
(1) In the structured body of the present embodiment, the surface coating layer is formed on the surface of the base material made of metal. As the surface coating layer, first, the first layer containing an amorphous inorganic material is formed on the surface of the base material. The thermal conductivity of the amorphous inorganic material composing the first layer of the surface coating layer is lower than that of the metal composing the base material. Accordingly, when the base material of the structured body is heated, a heat transfer rate of the base material is high, but a heat transfer rate, at which heat is transferred from the base material through the surface coating layer to the outside of the structured body, is low.
Accordingly, particularly in a low-temperature (approximately less than 500°C) region in which heat conduction largely contributes to heat transfer, heat is hardly released to the outside of the structured body. As a result of this, a temperature of the structured body can be quickly raised when the structured body is heated. Thus, the structured body in the present embodiment is excellent in heat insulating properties.

(2) In the structured body in the present embodiment, as the surface coating layer, the second layer containing a crystalline inorganic material (crystalline inorganic material having a softening point of 950°C or higher) having a higher softening point than that of the amorphous inorganic material composing the first layer is formed as an outermost layer of the surface coating layer. Accordingly, even when the surface coating layer of the structured body is exposed to a high-temperature, the crystalline inorganic material existing in the outermost layer of the surface coating layer of the structured body hardly softens. Therefore, it is possible to prevent the surface coating layer from peeling from the base material made of metal. Thus, the structured body in the present embodiment is excellent in heat resistance.
As described above, since the structured body in the present embodiment is excellent in heat insulating properties and heat resistance, it can be suitably used, for example, as an exhaust pipe.

(3) In the structured body in the present embodiment, the crystalline inorganic material contained in the second layer of the surface coating layer is zirconia or alumina.
Zirconia or alumina is a crystalline inorganic material having excellent heat resistance. Therefore, even when the surface coating layer of the structured body is exposed to a high-temperature, zirconia or alumina existing in the outermost layer of the surface coating layer of the structured body hardly softens, and therefore it is possible to prevent the surface coating layer from peeling from the base material made of metal.
Further, zirconia or alumina is also a crystalline inorganic material having excellent corrosion resistance. Therefore, when the surface coating layer of the structured body is exposed directly to high-temperature exhaust gases, it is possible to prevent the surface coating layer of the structured body from being corroded by at least one of nitrogen oxide (NOx) and sulfur oxide (SOx) contained in the exhaust gases. Further, if the surface coating layer of the structured body is composed of only a first layer, the surface coating layer causes a problem that foreign matters adhere to the surface coating layer in softening, leading to degradation of the surface coating layer, in addition to acid corrosion, but the above problems can be prevented by the second layer of the surface coating layer.

(4) In the structured body in the present embodiment, the total thickness of the first layer and the second layer of the surface coating layer is 1 to 2000 μm.
When the total thickness of the first layer and the second layer of the surface coating layer of the structured body is 1 to 2000 μm, a heat insulating property of the structured body is excellent.

(5) In the structured body in the present embodiment, the thermal conductivity at room temperature of the first layer of the surface coating layer is 0.05 to 2 W/m·K.
When the thermal conductivity at room temperature of the first layer of the surface coating layer of the structured body is 0.05 to 2 W/m·K, a heat transfer rate, at which heat is transferred to the outside of the structured body across the surface coating layer, can be low. Consequently the heat insulating properties of the structured body can be more enhanced.

(6) In the method for manufacturing the structured body in the present embodiment, the above-mentioned second layer of the surface coating layer is formed by thermal spraying.
In the thermal spraying, it is thought that a coating of almost every material can be formed as long as the material is melted or softened by heating. Thus, the second layer of the surface coating layer of the structured body can be easily formed by thermal spraying.
Further, if the second layer of the surface coating layer, having heat resistance, is formed by thermal spraying, high-temperature and high-speed particles to become a thermal-sprayed layer impinge on the first layer coating layer, containing an amorphous inorganic material, of the surface, and the particles to become a thermal-sprayed layer are engaged in the first layer of the surface coating layer, and consequently the second layer of the surface coating layer can firmly adhere to the first layer of the surface coating layer of the structured body. Accordingly, the first layer of the surface coating layer of the structured body can mitigate thermal stress generated in the second layer (thermal-sprayed layer) of the surface coating layer of the structured body in an environment in which thermal impact such as rapid temperature rise or rapid temperature drop is added to the structured body, and as a result of this, peeling of the surface coating layer due to thermal impact can be prevented.

### (EXAMPLES)

Hereinafter, examples in which the first embodiment of the present invention is more specifically disclosed will be described. In addition, the present invention is not limited to only these examples.

### (Example 1)

### (1) Preparation of Base material

A flat plate stainless steel base material (SUS430) having a size of 40 mm in length, 40 mm in width and 1.5 mm in thickness was used as a base material made of metal, and the base material was subjected to ultrasonic cleaning in an alcohol solvent, and subsequently sand blasted to roughen the surface (both sides) of the base material. Sand blasting was carried out for 10 minutes using #100 Al₂O₃ abrasive grain.
The surface roughness of the metal base material was measured by use of a surface roughness measuring apparatus (HANDY SURF E-35B manufactured by Tokyo Seimitsu Co., Ltd.), and consequently the surface roughness of the metal base material was Rz_{JIS} = 8.8 µm.
By the above processing, a flat plate base material was prepared.

### (2) Preparation of Raw Material Composition for the First Layer of the Surface Coating Layer

As a powder of the amorphous inorganic material, K4006A-100M (Bi₂O₃-B₂O₃ glass, softening point 770°C) manufactured by Asahi Glass Co., Ltd. was prepared.
As an organic binder, methylcellulose (trade name: METOLOSE-65SH) manufactured by Shin-Etsu Chemical Co., Ltd. was prepared.
In preparation of the raw material composition for the first layer of the surface coating layer, 100 parts by weight of water was further added to 100 parts by weight of powder of the amorphous inorganic material, and the resulting mixture was wet-mixed with a ball mill to prepare slurry.
In addition, in preparation of the raw material composition for the first layer of the surface coating layer, 0.1 to 3 wt% of the organic binder was added, taking a total weight of the raw material composition for the first layer as 100 wt%. Furthermore, 10 parts by weight of fine hollow spheres predominantly composed of silica was added as a pore-forming agent.

### (3) Manufacture of Structured Body

The raw material composition for the first layer of the surface coating layer was applied onto one surface of a flat base material by spray coating, and dried at 70°C for 20 minutes in a drying apparatus. Subsequently, this was fired by heating at 850°C for 15 minutes in the air to form a first layer of the surface coating layer having a thickness of 200 μm.

Subsequently, a second layer, having a thickness of 200 μm, of the surface coating layer was formed by thermal-spraying a powder of 8 wt% Y₂O₃ stabilized ZrO₂ (manufactured by Sulzer Metco Ltd., Metco 204NS-G) which is a crystalline inorganic material onto the surface of the above-mentioned first layer of the surface coating layer.
As a thermal spraying apparatus, a plasma flame spraying apparatus (manufactured by Sulzer Metco (Japan) Ltd. , 7MC) was employed. Spraying conditions are as follows; spraying current: 500 A, spraying voltage: 75 V, spraying distance: 75 mm, powder-supply rate: 25 g/min, amounts of Ar/H₂: 70 1/min/10 1/min. Thereby, a temperature at the time when the sprayed particles adhere to the surface of the first layer of the surface coating layer was set at 800°C or more.
By the above procedure, a structured body in Example 1 was manufactured.
The total thickness of the first layer and the second layer of the surface coating layer in the structured body in Example 1 is 400 µm.

### (Example 2)

A first layer of the surface coating layer was formed in the approximately same manner as in Example 1. However, a thickness of the first layer of the surface coating layer was adjusted to 300 μm by changing the amount of the raw material composition for the first layer of the surface coating layer to be applied. Further, when the first layer of the surface coating layer was formed, a raw material composition for the first layer of the surface coating layer, in which a mixing amount of fine hollow spheres was changed from 10 parts by weight to 20 parts by weight to change the porosity of the surface coating layer, was applied, and then fired by heating.
Subsequently, a second layer of the surface coating layer, having a thickness of 200 μm, was formed in the approximately same manner as in Example 1.
By the above procedure, a structured body in Example 2 was manufactured.
The total thickness of the first layer and the second layer of the surface coating layer in the structured body in Example 2 is 500 µm.

### (Example 3)

Using the raw material composition for the first layer of the surface coating layer used in Example 1, a first layer of the surface coating layer was formed in the approximately same manner as in Example 1. However, a thickness of the first layer of the surface coating layer was adjusted to 500 μm by changing the application amount of the raw material composition for the first layer of the surface coating layer.
Subsequently, a second layer of the surface coating layer was formed in the approximately same manner as in Example 1. However, the thickness of the second layer of the surface coating layer was adjusted to 300 μm by changing a thermal spraying time.
By the above procedure, a structured body in Example 3 was manufactured.
The total thickness of the first layer and the second layer of the surface coating layer in the structured body in Example 3 is 800 µm.

### (Example 4)

Using the raw material composition for the first layer of the surface coating layer used in Example 2, a first layer of the surface coating layer was formed in the approximately same manner as in Example 1. However, a thickness of the first layer of the surface coating layer was adjusted to 1000 μm by changing the application amount of the raw material composition for the first layer of the surface coating layer.
Subsequently, a second layer of the surface coating layer, having a thickness of 200 μm, was formed in the approximately same manner as in Example 1.
By the above procedure, a structured body in Example 4 was manufactured.
The total thickness of the first layer and the second layer of the surface coating layer in the structured body in Example 4 is 1200 µm.

### (Comparative Example 1)

A powder of a CoNiCrAlY alloy (Co-32 wt%Ni-21 wt%Cr-8 wt%Al-0.5%Y) was prepared as a metal powder of a material for forming the first layer of the surface coating layer.
Next, the powder of a CoNiCrAlY alloy was thermal-sprayed onto one surface of a plate-like base material under the same spraying condition as in Example 1 to form a first layer of the surface coating layer having a thickness of 200 μm.
Subsequently, a second layer of the surface coating layer was formed in the approximately same manner as in Example 1. However, the thickness of the second layer of the surface coating layer was adjusted to 300 μm by changing a thermal spraying time.
By the above procedure, a structured body in Comparative Example 1 was manufactured.
The total thickness of the first layer and the second layer of the surface coating layer in the structured body in Comparative Example 1 is 500 µm.

### (Comparative Example 2)

A first layer of the surface coating layer was formed in the approximately same manner as in Example 1. However, a thickness of the first layer of the surface coating layer was adjusted to 500 μm by changing the application amount of the raw material composition for the first layer of the surface coating layer. Further, a pore-forming agent was not added in preparation of the raw material composition for the first layer of the surface coating layer.
In Comparative Example 2, the second layer of the surface coating layer was not formed.
By the above procedure, a structured body in Comparative Example 2 was manufactured.
The total thickness of the first layer and the second layer of the surface coating layer in the structured body in Comparative Example 2 is 500 μm.

Configurations (types and thicknesses of the first layer and the second layer of the surface coating layer) of the surface coating layer of the structured bodies in Examples 1 to 4 and Comparative Examples 1 and 2 are collectively shown in Table 1.
Further, characteristics (thermal conductivity and porosity of the first layer of the surface coating layer, heat resistance, thermal impact resistance and corrosion resistance) of the structured bodies in Examples 1 to 4 and Comparative Examples 1 and 2 were evaluated by the following procedure, and the results of evaluation of the characteristics were collectively shown in Table 1.

### (Measurement of Thermal Conductivity of First Layer of Surface Coating Layer)

A thermal conductivity (25°C) of the first layer of the surface coating layer in each of the structured bodies in Examples 1 to 4 and Comparative Examples 1 and 2 was measured by use of a laser flash apparatus (thermal constant measuring apparatus: NETZSCH LFA 457 MicroFlash).
In addition, in each of the structured bodies in Examples 1 to 4 and Comparative Examples 1 and 2, the thermal conductivity of the first layer of the surface coating layer was measured before forming the second layer of the surface coating layer.
The thermal conductivity (25°C) of a base material (stainless steel base material) was measured similarly, and consequently the thermal conductivity of the base material (stainless steel base material) was 25 W/m·K.

### (Measurement of Porosities of First Layer of Surface Coating Layer)

The porosity of the first layer of the surface coating layer of each structured body was measured from orthogonal cross sections of the structured bodies in Examples 1 to 4 and Comparative Examples 1 and 2, using a scanning electron microscope (manufactured by Hitachi, Ltd., FE-SEM S-4800).
In addition, in the structured body in Comparative Example 1, since the first layer of the surface coating layer is composed of a metal (CoNiCrAlY alloy), pores were not present in the first layer of the surface coating layer. Therefore, this was shown by "NS" (Not Specified) in Table 1.

### (Evaluation of Heat Resistance)

The following heat resistance test was performed to evaluate the heat resistance of the structured bodies in Examples 1 to 4 and Comparative Examples 1 and 2.
Each structured body was placed in such a way that the surface coating layer was inclined downward at an angle of 60 degrees from the horizontal and the surface coating layer faced a heating surface of a heater, and the structured body was heated by the heater in such a way that a temperature of a center of the outermost surface of the structured body (surface coating layer side) became 950°C, and maintained at 950°C for 60 minutes. Thereafter, at the surface of the base material of each structured body, changes in film thickness (dropping downward), and exfoliation or degradation of the surface coating layer were observed. Changes in film thickness of the surface coating layer was checked by use of a film thickness meter, and the exfoliation or degradation of the surface coating layer was visually observed.
In a box of "Heat resistance" in Table 1, in the heat resistance test, the case where any of changes in film thickness (dropping downward), and exfoliation or degradation of the surface coating layer occurred was denoted by "-", and the case where changes in film thickness (dropping downward), and exfoliation or degradation of the surface coating layer did not occur was denoted by "++".
In addition, the porosities of the first layer of the surface coating layer of the structured bodies in Examples 1 to 4 and Comparative Examples 1 and 2 were measured before and after a heat resistance test, and consequently it was confirmed that the porosity measured before the heat resistance test was not different from that measured after the heat resistance test in the structured bodies which did not cause changes in film thickness (dropping downward), exfoliation and degradation of the surface coating layer.

### (Evaluation of Thermal Impact Resistance)

The following thermal impact test was performed to evaluate the thermal impact resistance of the structured bodies in Examples 1 to 4 and Comparative Examples 1 and 2.
Each structured body was heated at 900°C in a firing furnace, and then the structured body of 900°C was taken out of the furnace to the outside (room temperature), and forced to be cooled by a fan so that an average temperature drop rate during 2 minutes after taking out the structured body was 200 to 210°C/min. A series of these operations was taken as 1 cycle, and this cycle was repeated 10 times. Thereafter, the presence or absence of peeling of the surface coating layer of the structured body was visually observed.
In a box of "Thermal impact resistance" in Table 1, in the thermal impact test, the case where there was peeling in the surface coating layer of the structured body was denoted by "-", and the case where there was no peeling in the surface coating layer of the structured body was denoted by "++".

### (Evaluation of Corrosion Resistance)

The following acid corrosion test was performed to evaluate the corrosion resistance of the structured bodies in Examples 1 to 4 and Comparative Examples 1 and 2.
First, was prepared a test solution containing Cl⁻: 50 ppm, SO₃²⁻: 250 ppm, SO₄²⁻: 1250 ppm, CO₃²⁻: 2000 ppm, NH₄⁺: 1900 ppm, NO₂⁻: 100 ppm, NO₃⁻: 20 ppm, CH₃COO⁻: 400 ppm, HCOO⁻: 100 ppm, and HCHO: 250 ppm. Next, one structured body was fully immersed in a test container containing 50 ml of the above test solution, and each test container was held in an atmosphere of 80°C to evaporate the test solution completely. The operations were taken as 1 cycle and this cycle was repeated 10 times. Thereafter, the presence or absence of corrosion of the surface coating layer of the structured body was visually observed.
In a box of "Corrosion resistance" in Table 1, in the acid corrosion test, the case where the surface coating layer of the structured body was degraded and a film thickness decreased was denoted by "-", the case where the surface coating layer of the structured body was degraded but a film thickness did not change was denoted by "+" and the case where the surface coating layer of the structured body was not degraded and a film thickness did not change was denoted by "++".

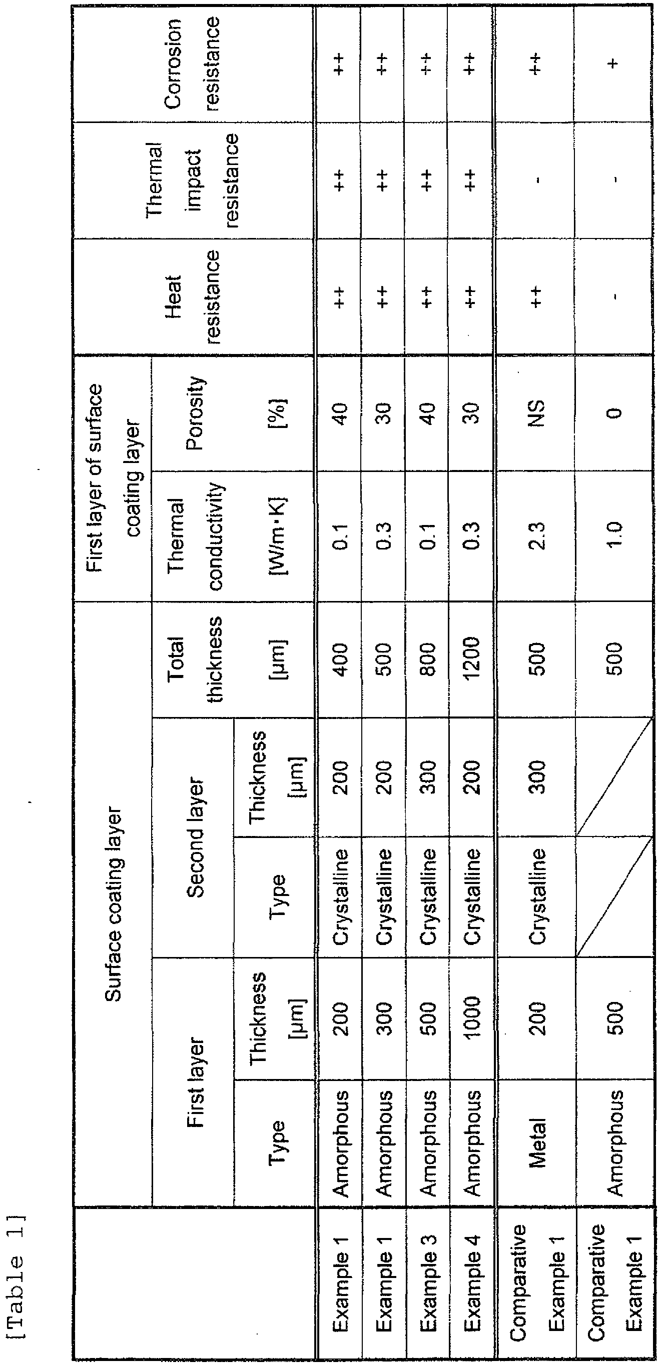

In the structured bodies in Examples 1 to 4, the second layer containing a crystalline inorganic material (zirconia) having a high softening point is formed as an outermost layer of the surface coating layer. Therefore, even when the structured body is exposed to a high-temperature of 950°C, the structured body did not cause changes in film thickness (dropping downward), exfoliation and degradation of the surface coating layer, and the surface coating layer of the structured body was prevented from being broken.
Further, in the structured bodies in Examples 1 to 4, peeling of the surface coating layer of the structured body in the thermal impact test did not occur, and the surface coating layer of the structured body was prevented from being broken. It is thought that the peeling did not occur since the adhesion between an amorphous inorganic material (glass) composing the first layer of the surface coating layer and a crystalline inorganic material (zirconia) composing the second layer of the surface coating layer of the structured body is excellent.
Moreover, since zirconia composing the second layer of the surface coating layer of the structured body is a crystalline inorganic material having excellent corrosion resistance, in the structured bodies in Examples 1 to 4, degradation and changes in film thickness of the surface coating layer were prevented.

In the structured body in Comparative Example 1, as with the structured bodies in Examples 1 to 4, the second layer containing a crystalline inorganic material (zirconia) having a high softening point and excellent corrosion resistance is formed as an outermost layer of the surface coating layer. Therefore, the structured body in Comparative Example 1 was excellent in heat resistance and corrosion resistance, as with the structured bodies in Examples 1 to 4.
However, in the structured body in Comparative Example 1, peeling occurred in the surface coating layer in the thermal impact test. It is thought that the peeling occurred since the adhesion between a metal (CoNiCrAlY alloy) composing the first layer of the surface coating layer of the structured body and a crystalline inorganic material (zirconia) composing the second layer of the surface coating layer is low.

In the structured body in Comparative Example 2, the second layer containing a crystalline inorganic material (zirconia) having a high softening point is not formed as an outermost layer of the surface coating layer, and a layer containing an amorphous inorganic material (glass) having a low softening point is formed. Therefore, the structured body caused changes in film thickness (dropping downward), exfoliation or degradation of the surface coating layer in the heat resistance test, and caused degradation of the surface coating layer of the structured body in the acid corrosion test. Moreover, the structured body caused peeling of the surface coating layer in the thermal impact test. It is thought that the peeling occurred since the adhesion between a metal (stainless steel) composing the base material and an amorphous inorganic material (glass) composing the first layer of the surface coating layer is low.

In the structured bodies in Examples 1 to 4, the thermal conductivity of the first layer of the surface coating layer is 0.1 to 0.3 W/m·K. Therefore, it is thought that since a difference between the thermal conductivity of the surface coating layer and a thermal conductivity (25 W/m·K) of the base material of the structured body is large, the structured body has the excellent heat insulating properties. The reason for this is likely that, in the structured bodies in Examples 1 to 4, the first layer of the surface coating layer contains an amorphous inorganic material (glass) with a large porosity and the porosity of the first layer of the surface coating layer is as large as 30 to 40%.

On the other hand, in the structured body in Comparative Example 1, the thermal conductivity of the first layer of the surface coating layer is 2.3 W/m·K. Therefore, it is thought that since a difference between the thermal conductivity of the surface coating layer and a thermal conductivity (25 W/m·K) of the base material of the structured body is small, the structured body has the poor heat insulating properties. The reason for this is likely that, in the structured body in Comparative Example 1, the first layer of the surface coating layer is made of a compact metal (CoNiCrAlY alloy).
In the structured body in Comparative Example 2, the thermal conductivity of the first layer of the surface coating layer is 1.0 W/m·K. Therefore, the structured body in Comparative Example 2 is superior in heat insulating properties to the structured body in Comparative Example 1, but as described above, the structured body in Comparative Example 2 has the problems of heat resistance, thermal impact resistance and corrosion resistance.

From the results described above, it is thought in the structured body including a base material made of metal and a surface coating layer formed on the surface of the base material that a structured body excellent in heat insulating properties and heat resistance can be prepared by forming a surface coating layer including a first layer which is formed on the surface of the base material and contains an amorphous inorganic material, and a second layer which is formed as an outermost layer of the surface coating layer and contains a crystalline inorganic material having a softening point higher than a softening point of the amorphous inorganic material.

### (Second Embodiment)

Hereinafter, a second embodiment, which is an embodiment of the structured body and the method for manufacturing a structured body of the present invention, will be described.
First, a structured body of the second embodiment of the present invention will be described.
In the structured body of the second embodiment of the present invention, the surface coating layer further includes a third layer including inorganic fibers and a fourth layer containing an amorphous inorganic material, the third layer is formed on the surface of the first layer, and the fourth layer is formed between the third layer and the second layer. Other configurations are the approximately same as in the structured body of the first embodiment of the present invention.

Fig. 4 is a cross-sectional view schematically showing an example of the structured body of the second embodiment of the present invention.
The structured body 2A shown in Fig.4 includes a base material 10a made of metal and a surface coating layer 20e formed on the surface of the base material 10a.

In the structured body 2A shown in Fig. 4, the surface coating layer 20e has a first layer 21a containing an amorphous inorganic material 31 and a second layer 22a containing a crystalline inorganic material 41, a third layer 23a including inorganic fibers 51 and a fourth layer 24a containing an amorphous inorganic material 31.
The surface coating layer 20e of the structured body 2A of the second embodiment of the present invention has a four-layer structure, and specifically, it has a structure in which four layers of the first layer 21a, the third layer 23a, the fourth layer 24a and the second layer 22a are laminated in this order from the side of the base material 10a. In other words, the first layer 21a of the surface coating layer 20e is formed on the surface of the base material 10a. The third layer 23a of the surface coating layer 20e is formed on the surface of the first layer 21a of the surface coating layer 20e and between the first layer 21a and the fourth layer 24a of the surface coating layer 20e. The fourth layer 24a of the surface coating layer 20e is formed on the surface of the third layer 23a of the surface coating layer 20e and between the third layer 23a and the second layer 22a of the surface coating layer 20e. The second layer 22a of the surface coating layer 20e is formed on the surface of the fourth layer 24a of the surface coating layer 20e as the outermost layer of the surface coating layer 20e.

In the structured body 2A shown in Fig. 4, the third layer 23a of the surface coating layer includes inorganic fibers 51.
A microscopic structure of the third layer 23a of the surface coating layer is observed with a scanning electron microscope (SEM) or the like, and consequently it is found that the third layer has a structure of inorganic fibers 51 tangled with one another and support one another to maintain a fixed shape.

Examples of the inorganic fibers composing the third layer of the surface coating layer of the structured body include silica-alumina fiber, alumina fiber, silica fiber, zirconia fiber, glass fiber, potassium titanate whisker fiber, rock wool, and inorganic fibers obtained by modifying each of the above-mentioned inorganic fibers so as to contain at least one compound selected from the group consisting of alkali metal compounds, alkaline earth metal compounds and boron compounds. These inorganic fibers are desirable in point of heat resistance, strength and ease of availability. These inorganic fibers may be used singly or in combination of two or more.
Among these inorganic fibers, the alumina fiber and the silica-alumina fiber are desirable from the viewpoint of heat resistance and a handling property.
In addition, the content of alkali metal compound or the like in inorganic fibers obtained by modifying inorganic fibers so as to contain an alkali metal compound or the like is desirably 15 to 40 wt%. Such the inorganic fibers exhibit moderate solubility in normal saline and are safe for environment and ecosystem even when released into the atmosphere.

In the structured body of the second embodiment of the present invention, an inorganic powder may be added to the third layer of the surface coating layer as required. When the inorganic powder is added to the third layer of the surface coating layer, the inorganic powder is embraced in a structure of inorganic fibers tangled with one another, and therefore radiation heat transfer and convectional heat transfer can be suppressed and a heat insulating property is improved.
Further, an inorganic binder may exist in the third layer of the surface coating layer of the structured body. When the inorganic binder exists in the third layer of the surface coating layer, since the inorganic fibers are bonded to one another at a point or plane where inorganic fibers contact with one another in a state of entanglement and firmly support one another, mechanical strength is further improved.
Moreover, the third layer of the surface coating layer of the structured body may contain a reinforcement member made of metal. When the third layer of the surface coating layer contains a reinforcement member, the inorganic fibers can be held and mechanical strength is improved. Examples of the reinforcement member include a metal mesh made of the same metal as that composing the base material.
That is, in the structured body of the second embodiment of the present invention, the third layer of the surface coating layer may contain at least one of the inorganic powder, the inorganic binder and the reinforcement member in addition to the inorganic fibers.

In addition, in the present specification, the inorganic fiber refers to an inorganic fiber having an aspect ratio of 3 or more. On the other hand, the inorganic powder refers to an inorganic powder having an aspect ratio less than 3. In addition, the aspect ratio refers to a ratio (b/a) of a longer diameter "b" to a shorter diameter "a" of a substance.

In the structured body of the second embodiment of the present invention, the third layer of the surface coating layer is formed from an inorganic fibers molded body prepared by molding inorganic fibers etc. into an arbitrary shape by a dry molding process or wet molding process. A method of preparing the inorganic fibers molded body will be described later.
A shape of the inorganic fibers molded body is not particularly limited, and examples thereof include a flat plate-shape, a disk shape, a cube, a rectangular parallelepiped, a cylindrical shape, a donut-shape, and a spherical shape.

The base material, the first layer of the surface coating layer and the second layer of the surface coating layer in the structured body of the second embodiment of the present invention have the approximately same configurations as in the base material, the first layer of the surface coating layer and the second layer of the surface coating layer in the structured body of the first embodiment of the present invention.
Accordingly, a material of the base material, an amorphous inorganic material contained in the first layer of the surface coating layer and a crystalline inorganic material contained in the second layer of the surface coating layer in the structured body of the second embodiment of the present invention are as described in the first embodiment of the present invention.

The fourth layer of the surface coating layer of the structured body has a configuration similar to the first layer of the surface coating layer. Therefore, the fourth layer of the surface coating layer in the structured body of the second embodiment of the present invention has a configuration similar to the first layer of the surface coating layer in the structured body of the first embodiment of the present invention.

In the structured body of the second embodiment of the present invention, as the first layer and the fourth layer of the surface coating layer, any of the first layer 21b in the structured body 1B shown in Fig. 2(a), the first layer 21c in the structured body 1C shown in Fig. 2(b) and the first layer 21d in the structured body 1D shown in Fig. 2 (c) may be formed. Further, in the structured body of the second embodiment of the present invention, the configurations of the first layer and the fourth layer of the surface coating layer may be the same or different.

In the structured body of the second embodiment of the present invention, a shape of the base material may be a semicylindrical-shape as with the structured body 1E shown in Fig. 3 (a), or may be a cylindrical-shape as with the structured body 1F shown in Fig. 3 (b) and the structured body 1G shown in Fig. 3(c).
Further, in the structured body of the second embodiment of the present invention, when a semicylindrical-shaped base material is used, the surface coating layer of the structured body may be formed on any of the surface on a smaller area side, the surface on a larger area side and the surfaces on both sides.
Moreover, in the structured body of the second embodiment of the present invention, when a cylindrical-shaped base material is used, the surface coating layer of the structured body may be formed on any of an inner face, an outer face, and outer and inner faces of the base material.
In addition, in the structured body of the second embodiment of the present invention, when the surface coating layer is formed on the both faces of the base material, configurations of the surface coating layers of the structured body may be the same or different.

In the structured body of the second embodiment of the present invention, the thickness of the surface coating layer (total thickness of the first layer, the second layer, the third layer and the fourth layer of the surface coating layer) is desirably 501.5 to 12500 μm, and more desirably 1040 to 6250 µm.
When the thickness of the surface coating layer of the structured body is less than 501.5 μm, the structured body hardly ensures an adequate heat insulating property since the thickness of the third layer of the surface coating layer, which contributes to improvements of heat insulating properties, is too small. On the other hand, when the thickness of the surface coating layer of the structured body exceeds 12500 μm, the surface coating layer is vulnerable to peeling off from the base material since the thickness of the surface coating layer is too large relative to the thickness of the base material. Further, when the thickness of the surface coating layer of the structured body exceeds 12500 μm, the surface coating layer of the structured body is vulnerable to a break since a degree of thermal impact to the surface coating layer of the structured body increases.

In the structured body of the second embodiment of the present invention, the thickness of the third layer of the surface coating layer is desirably 500 to 10000 μm, and more desirably 1000 to 5000 μm.
When the thickness of the third layer of the surface coating layer of the structured body is less than 500 μm, the structured body hardly achieves the adequate effect of heat insulation by providing the third layer. Further, when the thickness of the third layer of the surface coating layer of the structured body exceeds 10000 μm, the heat insulating properties of the structured body can be improved, but since the adhesion of the third layer to another layer is low, if the thickness of the third layer is too large, the third layer is vulnerable to peeling off, leading to difficulty in the retention of the surface coating layer of the structured body.

In the structured body of the second embodiment of the present invention, a desired thickness of the first layer of the surface coating layer, a desired thickness of the second layer of the surface coating layer, and the total thickness of the first layer and the second layer of the surface coating layer are as described in the first embodiment of the present invention.
Further, in the structured body of the second embodiment of the present invention, a desired thickness of the fourth layer of the surface coating layer is similar to a desired thickness of the first layer of the surface coating layer.

Next, a method for manufacturing a structured body of the second embodiment of the present invention will be described.
In the method for manufacturing the structured body of the second embodiment of the present invention, the process of forming the surface coating layer further includes:
a process of forming a third layer of the surface coating layer, including inorganic fibers, on the surface of the first layer of the surface coating layer; and
a process of forming a fourth layer of the surface coating layer, containing an amorphous inorganic material, between the third layer of the surface coating layer and the second layer of the surface coating layer.
Specifically, in the process of forming the surface coating layer, the first layer of the surface coating layer is formed on the surface of the base material, the third layer of the surface coating layer is formed on the surface of the first layer of the surface coating layer, the fourth layer of the surface coating layer is formed on the surface of the third layer of the surface coating layer, and the second layer of the surface coating layer is formed on the surface of the fourth layer of the surface coating layer.
Other processes in the method for manufacturing the structured body of the second embodiment of the present invention are similar to those in the method for manufacturing the structured body of the first embodiment of the present invention.
Herein, an example of methods for manufacturing the structured body of the second embodiment of the present invention will be described, taking, as an example, the case where an inorganic fibers molded body to become a third layer of the surface coating layer is prepared in advance and the first layer, the third layer and the fourth layer of the surface coating layer are collectively formed.

### (1) Process of Preparing Base Material Made of Metal

Starting from a base material (metal base material) made of metal, first, a cleaning process is performed in order to remove impurities on the surface of the metal base material.
Further, after the cleaning process, as required, the surface of the metal base material may be subjected to a roughening process in order to increase a specific surface area of the surface of the metal base material or to adjust the surface roughness of the metal base material. After the roughening process, a cleaning process may be further carried out.
Specific methods of the cleaning and roughening processes are as described in the first embodiment of the present invention.

### (2) Process of Preparing Inorganic Fibers Molded Body

An inorganic fibers molded body to become a third layer of the surface coating layer is prepared by molding inorganic fibers etc. into an arbitrary shape by a dry molding process or wet molding process.

When the inorganic fibers molded body is prepared by a dry molding process, inorganic fibers and, as required, an inorganic powder and/or an inorganic binder were charged into a mixer such as V-type mixer in a predetermined proportion and adequately mixed. Thereafter, the mixture was charged into a predetermined die and pressed to obtain an inorganic fibers molded body. The mixture may be heated during pressing as required.
The inorganic fibers molded body is usually flat plate-shaped, but is not limited to this shape, and may be a shape in which a plate-like body is stacked vertically.

On the other hand, when the inorganic fibers molded body is prepared by a wet molding process, inorganic fibers and, as required, an inorganic powder and/or an inorganic binder were mixed and stirred in water to adequately disperse. Thereafter, an aqueous solution of aluminum sulphate was added as an agglomerating agent to obtain a primary agglomerate in which the inorganic powder and/or inorganic binder is attached to the inorganic fibers. Next, an emulsion of an organic elastic material is added to water, as required, to a predetermined extent, and a cationic polymer agglomerating agent is added to obtain slurry (suspension) containing an agglomerate.
Subsequently, the slurry (suspension) containing the agglomerate is screened with a network material (mesh) and produced by a sheet-forming process to obtain a flat plate-shaped sheet produced by a sheet-forming process. Thereafter, the resulting sheet was dried to obtain an inorganic fibers molded body. Further, after producing by a sheet-forming process, a density of the sheet may be increased by pressing a whole body.

### (3) Process of Collectively Forming First Layer, Third Layer and Fourth Layer of Surface Coating Layer

First, a raw material composition for the first layer of the surface coating layer is prepared, and the surface of the metal base material is coated with the raw material composition for the first layer of the surface coating layer.
A method of preparing the raw material composition for the first layer of the surface coating layer, and a method of coating the metal base material with the raw material composition for the first layer of the surface coating layer are as described in the first embodiment of the present invention.

Next, the inorganic fibers molded body prepared in the above process (2) is placed on the raw material composition for the first layer of the surface coating layer applied onto the surface of the metal base material.
In this time, since the raw material composition for the first layer of the surface coating layer is in the form of slurry, it is desirable to immerse a part of the inorganic fibers molded body in the raw material composition for the first layer of the surface coating layer.
Moreover, a reinforcement member such as a metal mesh may be added to the inorganic fibers molded body.

Subsequently, the raw material composition for the fourth layer of the surface coating layer is prepared, and the surface of the inorganic fibers molded body, which is placed on the metal base material and the raw material composition for the first layer of the surface coating layer, is coated with the raw material composition for the fourth layer of the surface coating layer. Thereby, the inorganic fibers molded body is sandwiched between the raw material composition for the first layer of the surface coating layer and the raw material composition for the fourth layer of the surface coating layer.
Then, the metal base material, on which the raw material composition for the first layer of the surface coating layer, the inorganic fibers molded body and the raw material composition for the fourth layer of the surface coating layer are laminated in this order from the metal base material side, is subjected to a firing process.
By the procedure described above, the first layer, the third layer and the fourth layer of the surface coating layer are collectively formed on the metal base material.
In addition, as the raw material composition for the fourth layer of the surface coating layer, the same composition as in the raw material composition for the first layer of the surface coating layer can be employed. The raw material that is different in composition from the raw material composition for the first layer of the surface coating layer may be used.
A method of preparing the raw material composition for the fourth layer of the surface coating layer, and a method of coating the inorganic fibers molded body with the raw material composition for the fourth layer of the surface coating layer are the approximately same as in the method for forming the first layer of the surface coating layer.
Further, a specific method of firing process is as described in the first embodiment of the present invention.

### (4) Process of Forming Second Layer of Surface Coating Layer

A second layer of the surface coating layer, containing a crystalline inorganic material having a softening point of 950°C or higher, is formed on the surface of the fourth layer of the surface coating layer formed in the above process (3).
Specific method of forming the second layer of the surface coating layer are as described in the first embodiment of the present invention.
By the above procedure, a structured body of the second embodiment of the present invention can be manufactured.

In addition, the structured body of the second embodiment of the present invention may be manufactured by forming the first layer, the third layer and the fourth of the surface coating layer independently on the metal base material. In this case, after the first layer of the surface coating layer is formed, an inorganic fibers molded body may be placed on the first layer of the surface coating layer using an adhesive or the like.

In the second embodiment of the present invention, the effects (1) to (6) described in the first embodiment of the present invention can be exerted and the following effect can be exerted.
(7) In the structured body of the present embodiment, the surface coating layer further includes a third layer including inorganic fibers and a fourth layer containing an amorphous inorganic material, the third layer is formed on the surface of the first layer, and the fourth layer is formed between the third layer and the second layer.
The third layer of the surface coating layer has a very large porosity since it includes inorganic fibers. Accordingly, a thermal conductivity of the surface coating layer can be significantly decreased. As a result of this, since a difference between the thermal conductivity of the surface coating layer and a thermal conductivity of the base material can be increased, the heat insulating properties of the structured body can be more improved.

### (Third Embodiment)

Hereinafter, a third embodiment which is an embodiment of the structured body of the present invention will be described, in reference to drawings.
The structured body of the third embodiment of the present invention is an exhaust pipe used as a member composing an exhaust system connected to an internal combustion engine such as an automobile engine. A configuration of the structured body of the third embodiment of the present invention is the same as that of the structured body of the first embodiment or the second embodiment of the present invention except that the base material is a tubiform as an essential configuration.

Specifically, the structured body of the third embodiment of the present invention is suitably used, for example, as an exhaust manifold.
Hereinafter, the structured body of the third embodiment of the present invention will be described, taking an exhaust manifold connected to an internal combustion engine such as an automobile engine as an example.

Fig. 5 is an exploded perspective view schematically showing an automobile engine and an exhaust manifold connected to the automobile engine in relation to the structured body of the third embodiment of the present invention.
Further, Fig. 6 (a) is an A-A line cross-sectional view of an automobile engine and an exhaust manifold shown in Fig. 5, and Fig. 6 (b) is a B-B line cross-sectional view of an exhaust manifold shown in Fig. 6(a).

As shown in Fig. 5 and Fig. 6(a), the exhaust manifold 110 (structured body of the third embodiment of the present invention) is connected to the automobile engine 100.
A cylinder head 102 is mounted on a top of a cylinder block 101 of the automobile engine 100. The exhaust manifold 110 is attached to one side of the cylinder head 102.

The exhaust manifold 110 has a shape like a glove and includes branched pipes 111a, 111b, 111c and 111d corresponding to the number of cylinders, and a collecting part 112 combining the branched pipes 111a, 111b, 111c and 111d into one.
Moreover, a catalytic converter including a catalyst supporting carrier is connected to the exhaust manifold 110. The exhaust manifold 110 has a function of collecting exhaust gases from the respective cylinders and sending the exhaust gases to the catalytic converter.
Then, the exhaust gases G (in Fig. 6 (a), the exhaust gases is denoted by "G" and a flow direction of the exhaust gases is indicated by an arrow) discharged from an automobile engine 100 pass through an exhaust manifold 110, are flown into a catalytic converter, purified by a catalyst supported by a catalyst supporting carrier, and discharge out of an outlet.

As shown in Fig. 6(b), the exhaust manifold 110 (structured body of the third embodiment of the present invention) includes a base material 120 made of metal and a surface coating layer 130 formed on the surface of the base material 120.
In the exhaust manifold 110 (structured body of the third embodiment of the present invention) shown in Fig. 6(b), the base material 120 is a tubiform, and the surface coating layer 130 is formed on the inner face of the base material 120.
Further, the surface coating layer 130 has a first layer 131 containing an amorphous inorganic material and a second layer 132 containing a crystalline inorganic material.

In the structured body (exhaust manifold) of the third embodiment of the present invention, a similar configuration to those of the surface coating layers in the structured bodies described in the first embodiment and the second embodiment can be employed as the configuration of the surface coating layer.
An example of a surface coating layer, which has a similar configuration to that of the surface coating layer 20a in the structured body 1A shown in Fig. 1, is shown, as the surface coating layer 130, in the exhaust manifold 110 (structured body of the third embodiment of the present invention) shown in Fig. 6(b).

In the structured body (exhaust manifold) of the third embodiment of the present invention, the surface coating layer is desirably formed on the entire inner face of the base material. The reason for this is that an area of the surface coating layer contacting with the exhaust gases is maximized and the structured body is excellent in heat resistance. However, the surface coating layer may be formed only on a part of the inner face of the base material.
Further, in the structured body of the third embodiment of the present invention, the surface coating layer may be formed on the outer face in addition to the inner face, or may be formed only on the outer face.

An example of the exhaust manifold has been described as the structured body of the third embodiment of the present invention, but the application of the structured body of the third embodiment of the present invention is not limited to the exhaust manifold, and it can be suitably used as an exhaust pipe, a pipe composing the catalytic converter, a turbine housing or the like.

When the structured body of the third embodiment of the present invention is manufactured, it can be manufactured in the approximately same manner as in the structured body of the first embodiment or the second embodiment of the present invention except that the shape of the base material is different.
In addition, in the structured body of the third embodiment of the present invention, when the surface coating layer is formed on the inner face of the base material, as described in the first embodiment of the present invention, it is preferred to use the base material composed of the first half-cut member and the second half-cut member.

Also in the third embodiment of the present invention, the effects (1) to (6) described in the first embodiment of the present invention, and the effect (7) described in the second embodiment of the present invention can be exerted.

### (Other Embodiment)

In the structured body of the first embodiment of the present invention, the first layer of the surface coating layer is formed on the surface of the base material, and the second layer of the surface coating layer is formed on the surface of the first layer of the surface coating layer. Further, in the structured body of the second embodiment of the present invention, the first layer of the surface coating layer is formed on the surface of the base material, the third layer of the surface coating layer is formed on the surface of the first layer of the surface coating layer, the fourth layer of the surface coating layer is formed on the surface of the third layer of the surface coating layer, and the second layer of the surface coating layer is formed on the surface of the fourth layer of the surface coating layer.
However, in the structured body of the present invention, a configuration between the first layer and the second layer of the surface coating layer is arbitrary as long as the first layer of the surface coating layer is formed on the surface of the base material and the second layer of the surface coating layer is formed as the outermost layer of the surface coating layer.
However, in the case where the structured body of the present invention is used as an exhaust pipe, when the surface coating layer is formed on an inner face of the tubiform, if many layers are present between the first layer and the second layer of the surface coating layer, a diameter of the exhaust pipe becomes small, and the exhaust gases become hard to pass. Accordingly, when the structured body of the present invention is used as an exhaust pipe, the surface coating layer preferably has a two-layer configuration consisting of the first layer and the second layer.

When the raw material composition for the first layer of the surface coating layer, which is used in manufacturing the structured body of the present invention, contains the crystalline inorganic material and the amorphous inorganic material, a mixed amount of the amorphous inorganic material has a desired lower limit of 50 wt% and a desired upper limit of 99.5 wt% with respect to a total weight of a powder of the amorphous inorganic material and a powder of the crystalline inorganic material.
When the mixed amount of the amorphous inorganic material contained in the first layer of the surface coating layer of the structured body is less than 50 wt%, since the amount of the amorphous inorganic material contributing to the adhesion between the surface coating layer and the base material of the structured body is too small, the surface coating layer tends to exfoliate in the structured body manufactured. On the other hand, when the mixed amount of the amorphous inorganic material contained in the first layer of the surface coating layer of the structured body exceeds 99.5 wt%, since the amount of the crystalline inorganic material is small, the adequate effect of improving the adhesion between the surface coating layer and the base material of the structured body is hardly achieved.
The mixed amount of the amorphous inorganic material contained in the raw material composition for the first layer of the surface coating layer has a more desired lower limit of 60 wt% and a more desired upper limit of 95 wt%.

When the raw material composition for the first layer of the surface coating layer, which is used in manufacturing the structured body of the present invention, contains the crystalline inorganic material and the amorphous inorganic material, a mixed amount of the crystalline inorganic material has a desired lower limit of 0.5 wt% and a desired upper limit of 50 wt% with respect to a total weight of a powder of the amorphous inorganic material and a powder of the crystalline inorganic material.
When the mixed amount of the crystalline inorganic material contained in the first layer of the surface coating layer of the structured body is less than 0.5 wt%, since the amount of the crystalline inorganic material contributing to the adhesion between the surface coating layer and the base material of the structured body is too small, the adequate effect of improving the adhesion between the surface coating layer and the base material of the structured body is hardly achieved. On the other hand, when the mixed amount of the crystalline inorganic material contained in the first layer of the surface coating layer of the structured body exceeds 50 wt%, the amount of the amorphous inorganic material contributing to the adhesion between the surface coating layer and the base material of the structured body is small, and the surface coating layer may exfoliate in the structured body manufactured.

Examples of the dispersion medium capable of being mixed in the raw material composition for the first layer of the surface coating layer, which is used in manufacturing the structured body of the present invention, include water and organic solvents such as methanol, ethanol, acetone and the like. A mixing ratio of the mixed powder or the powder of the amorphous inorganic material, which are respectively contained in the raw material composition for the first layer of the surface coating layer, to the dispersion medium is not particularly limited, but it is desired, for example, that the amount of the dispersion medium is 50 to 150 parts by weight with respect to 100 parts by weight of the mixed powder or the powder of the amorphous inorganic material. The reason for this is that this mixing ratio yields viscosity suitable for application to the base material.
Examples of the organic binder capable of being mixed in the raw material composition for the first layer of the surface coating layer include polyvinyl alcohol, methylcellulose, ethylcellulose, carboxymethylcellulose, and the like. These may be used singly or in combination of two or more of them.
Further, the dispersion medium and the organic binder may be used in combination.

In the structured body of the present invention, a shape of the base material may be a flat plate, a semicylindrical-shape, a cylindrical shape, and a profile of its cross section may be any shape, for example, an ellipse, polygonal shape, etc.
When the base material of the structured body is a tubiform, a diameter of the base material does not have to be constant along a longitudinal direction, and a shape of a cross section perpendicular to a length direction does not have to be constant along a longitudinal direction.

When the structured body of the present invention is used as an exhaust manifold, the number of branched pipes composing the exhaust manifold may be equal to the number of engine cylinders and it is not particularly limited.
In addition, examples of the cylinder of the engine include a single cylinder, 2 cylinders, 4 cylinders, 6 cylinders and 8 cylinders.

In the structured body of the present invention, a desired lower limit of the thickness of the base material is 0.2 mm, and a more desired lower limit of the thickness of the base material is 0.4 mm, and a desired upper limit is 10 mm and a more desired upper limit is 4 mm.
When the thickness of the base material of the structured body is less than 0.2 mm, strength of the structured body is insufficient. When the thickness of the base material of the structured body is more than 10 mm, a weight of the structured body increases, and therefore it become difficult to mount the structured body on vehicles such as automobiles and the structured body is not suitable for practical use.

In the structured body of the present invention, the surface of the base material may be a roughened surface at which bumps and dips are formed.
In this case, the surface roughness Rz_{JIS} of the roughened surface of the base material of the structured body is preferably 1.5 to 15 μm.
The surface roughness Rz_{JIS} of the roughened surface of the base material of the structured body is ten-point mean roughness defined by JIS B 0601 (2001).
When the surface roughness Rz_{JIS} of the roughened surface of the base material of the structured body is less than 1.5 μm, adequate adhesion between the base material and the surface coating layer is hardly attained since a surface area of the base material becomes small. On the other hand, when the surface roughness Rz_{JIS} of the roughened surface of the base material of the structured body exceeds 15 μm, the surface coating layer is hardly formed on the surface of the base material. The reason for this is likely that if the surface roughness Rz_{JIS} of the roughened surface of the base material of the structured body is too large, slurry (raw material composition for the first layer of the surface coating layer) does not penetrate into a valley portion of bumps and dips formed at the surface of the base material to produce voids there.
In addition, the surface roughness Rz_{JIS} of the roughened surface of the base material of the structured body can be measured according to JIS B 0601 (2001) by use of HANDY SURF E-35B manufactured by Tokyo Seimitsu Co.., Ltd.

In the structured body of the present invention, the surface coating layer does not necessarily have to be formed on the entire surface of the base material.
For example, when the structured body of the present invention is used as an exhaust pipe, the surface coating layer may be formed on the inner face of the tubiform as a base material. When the surface coating layer is formed on the inner face of the tubiform as a base material, the surface coating layer do not have to be formed on the entire inner face of the tubiform as a base material, and the surface coating layer may be formed on at least an area with which the exhaust gases contact directly.

In the structured body of the present invention, when the surface coating layer includes the third layer, a shape of a cross section of the inorganic fibers composing the third layer of the surface coating layer is not particularly limited, and examples thereof include a circular cross section, a planiform cross section, a hollow cross section, a polygonal cross section and a core-sheath cross section. Among these, a modified cross-section fiber having a hollow cross section, a planiform cross section or a polygonal cross section can be suitably used since they have many occasions to reflect radiation heat transfer in heat transfer and heat insulating properties are slightly improved.

In the structured body of the present invention, when the surface coating layer includes the third layer, a desired lower limit of an average fiber length of the inorganic fibers composing the third layer of the surface coating layer is 0.1 mm, and a more desired lower limit is 0.5 mm. On the other hand, a desired upper limit of an average fiber length of the inorganic fibers is 50 mm, and a more desired upper limit is 10 mm.
When an average fiber length of the inorganic fibers contained in the third layer of the surface coating layer of the structured body is less than 0.1 mm, fibers hardly tangle with one another and mechanical strength of the resulting third layer of the surface coating layer tends to deteriorate. On the other hand, when an average fiber length of the inorganic fibers contained in the third layer of the surface coating layer of the structured body is more than 50 mm, the effect of reinforcing the surface coating layer is achieved, but the inorganic fibers cannot closely tangle with one another or single inorganic fibers alone curl, and thereby continuous cavity is easily produced, and therefore, heat insulating properties tend to deteriorate.

In the structured body of the present invention, when the surface coating layer includes the third layer, a desired lower limit of an average fiber diameter of the inorganic fibers composing the third layer of the surface coating layer is 1 μm, and a more desired lower limit is 2 μm. On the other hand, a desired upper limit of an average fiber diameter of the inorganic fibers is 10 μm, and a more desired upper limit is 5 µm.
When an average fiber diameter of the inorganic fibers contained in the third layer of the surface coating layer of the structured body is less than 1 μm, mechanical strength of the inorganic fibers theirself deteriorates. On the other hand, when an average fiber diameter of the inorganic fibers contained in the third layer of the surface coating layer of the structured body is more than 10 μm, solid heat transfer through the inorganic fibers increases, and heat insulating properties tend to deteriorate.

In the structured body of the present invention, when the surface coating layer includes the third layer, the third layer of the surface coating layer may further include an inorganic powder.
Examples of the inorganic powder contained in the third layer of the surface coating layer of the structured body include TiO₂ powder, BaTiO₃ powder, PbS powder, SiO₂ powder, ZrO₂ powder, SiC powder, NaF powder, LiF powder, and the like. These inorganic powders may be used singly or in combination of two or more.
When the inorganic powders are used in combination, examples of preferred combinations include a combination of TiO₂ powder and SiO₂ powder, a combination of TiO₂ powder and BaTiO₃ powder, a combination of SiO₂ powder and BaTiO₃ powder and a combination of TiO₂ powder, SiO₂ powder, and BaTiO₃ powder.

In the structured body of the present invention, when the surface coating layer includes the third layer, the third layer of the surface coating layer may include an inorganic binder for the purpose of maintaining strength at elevated temperature.
Examples of the inorganic binder contained in the third layer of the surface coating layer of the structured body include colloidal silica, synthesized mica, montmorillonite, and the like. These inorganic binders may be used singly or in combination of two or more.
With respect to an aspect of use of the inorganic binder, the inorganic binder can be mixed in a raw material, or the resulting inorganic fibers molded body can be impregnated with the inorganic binder.

In the structured body of the present invention, it is an essential constituent that the structured body includes a base material made of metal and a surface coating layer formed on the surface of the base material and that the surface coating layer includes a first layer which is formed on the surface of the base material and contains an amorphous inorganic material, and a second layer which is formed as an outermost layer of the surface coating layer and contains a crystalline inorganic material having a softening point of 950°C or higher.
The desired effects can be achieved by appropriately combining various configurations (e.g., configuration of the first layer of the surface coating layer, shape of the base material, exhaust manifold) which have been described in detail in the first embodiment to third embodiment of the present invention and other embodiments of the present invention with the essential constituent.

### EXPLANATION OF SYMBOLS

1A, 1B, 1C, 1D, 1E, 1F, 1G, 2A Structured body
110 Exhaust manifold (Structured body)
10a, 10b, 10c, 120 Base material
20a, 20b, 20c, 20d, 20e, 130 Surface coating layer
21a, 21b, 21c, 21d, 131 First layer of a surface coating layer
22a, 132 Second layer of a surface coating layer
23a Third layer of a surface coating layer
24a Fourth of a surface coating layer
31 Amorphous inorganic material (Amorphous inorganic material contained in the first layer or the fourth layer of the surface coating layer)
32 Crystalline inorganic material (Crystalline inorganic material contained in the first layer of the surface coating layer)
41 Crystalline inorganic material (Crystalline inorganic material contained in the second layer of the surface coating layer)
51 Inorganic fiber (Inorganic fiber contained in the third layer of the surface coating layer)

## Claims

1. A structured body (1A-1G, 2A, 110) comprising:
a base material (10a, 10b, 10c, 120) made of metal; and
a surface coating layer (20a-e, 130) formed on the surface of said base material,
wherein
said surface coating layer comprises:
a first layer (21a-d, 131) which is formed on the surface of said base material and contains an amorphous inorganic material (31); and
a second layer (22a, 132) which is formed as an outermost layer of said surface coating layer and contains a crystalline inorganic material (41) having a softening point of 950°C or higher,
said amorphous inorganic material contained in said first layer of the surface coating layer is a low melting point glass having a softening point of 300-1000°C, and
said crystalline inorganic material contained in said second layer of the surface coating layer is one of zirconia and alumina, and
said second layer of the surface coating layer is formed by thermal spraying.

2. The structured body according to claim 1,
wherein
said low melting point glass includes one or more of the group comprising: soda-lime glass, alkali-free glass, borosilicate glass, kali glass (potash glass), crystal glass, titanium crystal glass, barium glass, boron glass, strontium glass, alumina-silicate glass, soda-zinc glass, soda-barium glass.

3. The structured body according to claim 1 or 2,
wherein
the total thickness of said first layer and said second layer of the surface coating layer is 1 to 2000 µm.

4. The structured body according to any of claims 1 to 3,
wherein
the thermal conductivity at room temperature of said first layer of the surface coating layer is 0.05 to 2 W/m·K.

5. The structured body according to any of claims 1 to 4,
wherein
said first layer of the surface coating layer further contains a crystalline inorganic material.

6. The structured body according to claim 5,
wherein
said crystalline inorganic material contained in said first layer of the surface coating layer is an oxide of at least one of aluminum, manganese, iron, copper, cobalt and chromium.

7. The structured body according to any of claims 1 to 6,
wherein
said base material is a tubiform.

8. The structured body according to claim 7,
wherein
said surface coating layer is formed on an inner face of said tubiform.

9. The structured body according to claim 8,
wherein
said surface coating layer is further formed on an outer face of said tubiform.

10. The structured body according to any of claims 1 to 9,
wherein
said surface coating layer further comprises:
a third layer (23a) comprising inorganic fibers (51); and
a fourth layer (24a) containing an amorphous inorganic material (31),
said third layer is formed on the surface of said first layer, and
said fourth layer is formed between said third layer and said second layer.

11. A method for manufacturing the structured body according to any of claims 1 to 9, comprising processes of:
preparing a base material made of metal; and
forming a surface coating layer on the surface of said base material,
wherein
said process of forming the surface coating layer comprises:
a process of forming a first layer of the surface coating layer, containing an amorphous inorganic material, on the surface of said base material; and
a process of forming a second layer of the surface coating layer, containing a crystalline inorganic material having a softening point of 950°C or higher, as an outermost layer of said surface coating layer, wherein
said amorphous inorganic material contained in said first layer of the surface coating layer is a low melting point glass having a softening point of 300-1000°C, and
said crystalline inorganic material contained in said second layer of the surface coating layer is one of zirconia and alumina, and
said second layer of the surface coating layer is formed by thermal spraying.

12. The method for manufacturing the structured body according to claim 11,
wherein
said process of forming the surface coating layer further comprises:
a process of forming a third layer of the surface coating layer, comprising inorganic fibers, on the surface of said first layer of the surface coating layer; and
a process of forming a fourth layer of the surface coating layer, containing an amorphous inorganic material, between said third layer of the surface coating layer and said second layer of the surface coating layer.

## Patentansprüche

1. Strukturkörper (1A-1G, 2A, 110) mit:
einem Basismaterial (10a, 10b, 10c, 120), das aus Metall hergestellt ist; und
einer Oberflächenbeschichtungsschicht (20a-e, 130), die an der Oberfläche des Basismaterials ausgebildet ist, wobei
die Oberflächenbeschichtungsschicht aufweist:
eine erste Schicht (21a-d, 131), die an der Oberfläche des Basismaterials ausgebildet ist und ein amorphes anorganisches Material aufweist (31); und
eine zweite Schicht (22a, 132), die als eine äußerste Schicht der Oberflächenbeschichtungsschicht ausgebildet ist und ein kristallines anorganisches Material (21) aufweist, das einen Erweichungspunkt von 950°C oder höher aufweist,
das amorphe anorganische Material, das in der ersten Schicht der Oberflächenbeschichtungsschicht enthalten ist, ein Glas mit niedrigem Schmelzpunkt ist, das einen Erweichungspunkt von 300 bis 1000°C hat, und
das kristalline anorganische Material, das in der zweiten Schicht der Oberflächenbeschichtungsschicht enthalten ist, Zirkonoxid oder Alumniumoxid ist und
die zweite Schicht der Oberflächenbeschichtungsschicht durch thermisches Spritzen ausgebildet ist.

2. Strukturkörper nach Anspruch 1, bei dem
das Glas mit niedrigem Schmelzpunkt ein oder mehrere Elemente der Gruppe bestehend aus: Natronkalk-Glas, alkalifreiem Glas, Borsilikat-Glas, Alkaliglas (Pottasche-Glas), Kristallglas, Titan-Kristallglas, Bariumglas, Borglas, Stronziumglas, Aluminiumoxid-Silikatglas, Natron-Zinkglas, Natron-Bariumglas aufweist.

3. Strukturkörper nach Anspruch 1 oder 2, bei dem
die Gesamtdicke der ersten Schicht und der zweiten Schicht der Oberflächenbeschichtungsschicht 1 bis 2000 µm beträgt.

4. Strukturkörper nach einem der Ansprüche 1 bis 3, bei dem
die thermische Leitfähigkeit bei Raumtemperatur der ersten Schicht der Oberflächenbeschichtungsschicht 0,05 bis 2 W/m · K beträgt.

5. Strukturkörper nach einem der Ansprüche 1 bis 4, bei dem
die erste Schicht der Oberflächenbeschichtungsschicht ferner ein kristallines anorganisches Material aufweist.

6. Strukturkörper nach Anspruch 5, bei dem
das kristalline anorganische Material, das in der ersten Schicht der Oberflächenbeschichtungsschicht enthalten ist, ein Oxid zumindest eines Elements aus der Gruppe bestehend aus Aluminium, Mangan, Eisen, Kupfer, Kobalt und Chrom ist.

7. Strukturkörper nach einem der Ansprüche 1 bis 6, bei dem
das Basismaterial eine Tubusausbildung ist.

8. Strukturkörper nach Anspruch 7, bei dem
die Oberflächenbeschichtungsschicht an einer Innenfläche der Tubusausbildung ausgebildet ist.

9. Strukturkörper nach Anspruch 8, bei dem
die Oberflächenbeschichtungsschicht ferner an einer Außenfläche der Tubusausbildung ausgebildet ist.

10. Strukturkörper nach einem der Ansprüche 1 bis 9, bei dem
die Oberflächenbeschichtungsschicht ferner aufweist:
eine dritte Schicht (23a) mit anorganischen Fasern (51); und
eine vierte Schicht (24a), die ein amorphes anorganisches Material (31) aufweist,
die dritte Schicht an der Oberfläche der ersten Schicht ausgebildet ist und
die vierte Schicht zwischen der dritten Schicht und der zweiten Schicht ausgebildet ist.

11. Verfahren zum Herstellen des Strukturkörpers nach einem der Ansprüche 1 bis 9, umfassend die folgenden Prozesse:
Herstellen eines Basismaterials aus Metall; und
Ausbilden einer Oberflächenbeschichtungsschicht an der Oberfläche des Basismaterials,
wobei der Prozess von Ausbilden der Oberflächenbeschichtungsschicht umfasst:
einen Prozess von Ausbilden einer ersten Schicht der Oberflächenbeschichtungsschicht, die ein amorphes anorganisches Material aufweist, an der Oberfläche des Basismaterials; und
einen Prozess von Ausbilden einer zweiten Schicht der Oberflächenbeschichtungsschicht, die ein kristallines anorganisches Material aufweist, das einen Erweichungspunkt von 950°C oder höher aufweist, als eine äußerste Schicht der Oberflächenbeschichtungsschicht, wobei
das amorphe anorganische Material, das in der ersten Schicht der Oberflächenbeschichtungsschicht enthalten ist, ein Glas mit niedrigem Schmelzpunkt ist, das einen Erweichungspunkt von 300 bis 1000°C hat, und
das kristalline anorganische Material, das in der zweiten Schicht der Oberflächenbeschichtungsschicht enthalten ist, Zirkonoxid oder Aluminiumoxid ist und
die zweite Schicht der Oberflächenbeschichtungsschicht durch thermisches Spritzen ausgebildet wird.

12. Verfahren zum Herstellen des Strukturkörpers nach Anspruch 11, bei dem
der Prozess von Ausbilden der Oberflächenbeschichtungsschicht ferner umfasst:
einen Prozess von Ausbilden einer dritten Schicht der Oberflächenbeschichtungsschicht, die anorganische Fasern aufweist, an der Oberfläche der ersten Schicht der Oberflächenbeschichtungsschicht; und
einen Prozess von Ausbilden einer vierten Schicht der Oberflächenbeschichtungsschicht, die ein amorphes anorganisches Material aufweist, zwischen der dritten Schicht der Oberflächenbeschichtungsschicht und der zweiten Schicht der Oberflächenbeschichtungsschicht.

## Revendications

1. Corps structuré (1A-1G, 2A, 110) comprenant :
un matériau de base (10a, 10b, 10c, 120) constitué de métal ; et
une couche de revêtement de surface (20a-e, 130) formée sur la surface dudit matériau de base,
dans lequel
ladite couche de revêtement de surface comprend :
une première couche (21a-d, 131) qui est formée sur la surface dudit matériau de base et contient un matériau amorphe inorganique (31) ; et
une deuxième couche (22a, 132) qui est formée comme une couche externe de ladite couche de revêtement de surface et contient un matériau cristallin inorganique (41) ayant un point de ramollissement de 950°C ou plus,
ledit matériau amorphe inorganique contenu dans ladite première couche de la couche de revêtement de surface est un verre à bas point de fusion ayant un point de ramollissement de 300-1000°C, et
ledit matériau cristallin inorganique contenu dans ladite deuxième couche de la couche de revêtement de surface est un parmi la zircone et l'aluminium, et
ladite deuxième couche de la couche de revêtement de surface est formée par pulvérisation thermique.

2. Corps structuré selon la revendication 1,
dans lequel
ledit verre à bas point de fusion inclut un ou plusieurs du groupe comprenant : le verre de chaux sodée, le verre non alcalin, le verre de borosilicate, le verre de soude (verre de potasse), le verre de cristal, le verre de titane cristallin, le verre de baryum, le verre de bore, le verre de strontium, le verre de silicate-alumine, le verre de zinc sodé, le verre de baryum sodé.

3. Corps structuré selon la revendication 1 ou 2,
dans lequel
l'épaisseur totale de ladite première couche et ladite deuxième couche de la couche de revêtement de surface est de 1 à 2000 µm.

4. Corps structuré selon l'une quelconque des revendications 1 à 3,
dans lequel
la conductivité thermique à température ambiante de ladite première couche de la couche de revêtement de surface est de 0,05 à 2 W/m·K.

5. Corps structuré selon l'une quelconque des revendications 1 à 4,
dans lequel
ladite première couche de la couche de revêtement de surface contient en outre un matériau cristallin inorganique.

6. Corps structuré selon la revendication 5,
dans lequel
ledit matériau cristallin inorganique contenu dans ladite première couche de la couche de revêtement de surface est un oxyde d'au moins l'un d'aluminium, de manganèse, de fer, de cuivre, de cobalt et de chrome.

7. Corps structuré selon l'une quelconque des revendications 1 à 6,
dans lequel
ledit matériau de base est un tubiforme.

8. Corps structuré selon la revendication 7,
dans lequel
ladite couche de revêtement de surface est formée sur une face interne dudit tubiforme.

9. Corps structuré selon la revendication 8,
dans lequel
ladite couche de revêtement de surface est en outre formée sur une face externe dudit tubiforme.

10. Corps structuré selon l'une quelconque des revendications 1 à 9,
dans lequel
ladite couche de revêtement de surface comprend en outre :
une troisième couche (23a) comprenant des fibres inorganiques (51) ; et
une quatrième couche (24a) contenant un matériau amorphe inorganique (31),
ladite troisième couche est formée sur la surface de ladite première couche, et
ladite quatrième couche est formée entre ladite troisième couche et ladite deuxième couche.

11. Procédé de fabrication du corps structuré selon l'une quelconque des revendications 1 à 9, comprenant les processus de :
préparation d'un matériau de base constitué de métal ; et
formation d'une couche de revêtement de surface sur la surface dudit matériau de base,
dans lequel
ledit processus de formation d'une couche de revêtement de surface comprend :
un processus de formation d'une première couche de la couche de revêtement de surface, contenant un matériau amorphe inorganique, sur la surface dudit matériau de base ; et
un processus de formation d'une deuxième couche de la couche de revêtement de surface, contenant un matériau cristallin inorganique ayant un point de ramollissement de 950°C ou plus, comme une couche externe de ladite couche de revêtement de surface, dans lequel
ledit matériau amorphe inorganique contenu dans ladite première couche de la couche de revêtement de surface est un verre à bas point de fusion ayant un point de ramollissement de 300-1000°C, et
ledit matériau cristallin inorganique contenu dans ladite deuxième couche de la couche de revêtement de surface est un parmi la zircone et l'aluminium, et
ladite deuxième couche de la couche de revêtement de surface est formée par pulvérisation thermique.

12. Procédé de fabrication du corps structuré selon la revendication 11,
dans lequel
ledit processus de formation de la couche de revêtement de surface comprend en outre :
un processus de formation d'une troisième couche de la couche de revêtement de surface, comprenant des fibres inorganiques, sur la surface de ladite première couche de la couche de revêtement de surface ; et
un processus de formation d'une quatrième couche de la couche de revêtement de surface, contenant un matériau amorphe inorganique, entre ladite troisième couche de la couche de revêtement de surface et ladite deuxième couche de la couche de revêtement de surface.
